# EUROPEAN PATENT SPECIFICATION

(11) **EP 1 312 995 B1**
(45) Date of publication and mention of the grant of the patent: **16.08.2006**
(21) Application number: 01945734.0
(22) Date of filing: 29.06.2001
(51) Int. Cl.: G05B 19/418

(54) **PRODUCTION PLANNING METHOD AND SYSTEM FOR PRODUCTION PLANNING**
PRODUKTIONSPLANUNGSMETHODE UND SYSTEM ZUR PRODUKTIONSPLANUNG
PROCEDE ET SYSTEME DE PLANIFICATION DE LA PRODUCTION

(30) Priority: 30.06.2000 JP 2000197568
(43) Date of publication of application: 21.05.2003
(73) Proprietor: TEIJIN LIMITED, Osaka-shi Osaka 541-0054 (JP)
(72) Inventor: KURIHARA, Hideshi Teijin Ltd., Matsuyama Factory, Matsuyama-shi Ehime 791-8041 (JP); IIMURO, Hiroyuki Teijin Ltd., Matsuyama Factory, Matsuyama-shi Ehime 791-8041 (JP); ISHIKAWA, Kenichi, Chiyoda-ku Tokyo 100-0011 (JP)
(74) Representative: HOFFMANN EITLE
(86) International application number: PCT/JP2001/005678
(87) International publication number: WO 2002/003157

(56) References cited:
- JP-A- 4 180 165
- JP-A- 10 118 898
- JP-A- 11 232 344
- US-A- 5 299 115
- STEPHEN C. GRAVES: "Manufacturing Planning and Control" REPORT, November 1999 (1999-11), XP002251808 Massachusetts Institute of Technology
- PATENT ABSTRACTS OF JAPAN vol. 1999, no. 13, 30 November 1999 (1999-11-30) & JP 11 232344 A (NEC CORP), 27 August 1999 (1999-08-27)
- PATENT ABSTRACTS OF JAPAN vol. 1998, no. 10, 31 August 1998 (1998-08-31) & JP 10 118898 A (KUBOTA CORP), 12 May 1998 (1998-05-12)
- PATENT ABSTRACTS OF JAPAN vol. 016, no. 500 (P-1437), 15 October 1992 (1992-10-15) & JP 04 180165 A (SEKISUI CHEM CO LTD), 26 June 1992 (1992-06-26)

## Description

### TECHNICAL FIELD

This invention relates to a production method and production system, to establish production plans for the manufacture of products. In particular, this invention relates to a production method and production system to establish production plans which secure the desired product quantities and desired delivery date within a fixed period, for a plurality of products and using a plurality of production facilities, while using new raw materials, energy, workers, and other resources.

### BACKGROUND ART

In manufacturing industries, when generating a production plan in response to a desire to produce products spanning a variety of product types, as for instance when there are over one hundred product types, one major issue is the optimization of production efficiency, for example with respect to setup costs in preparation for manufacturing and product stocking costs accompanying switches in product types produced, while realizing a shortened time of delivery. Hence methods and systems for establishing production plans for these purposes have been proposed in greater numbers.

For example, in Laid-open Japanese Patent Publication No. 7-110836, a system is proposed in which requested production amounts in monthly units from each business section are weighted and assigned priorities; estimated product inventory and minimum necessary product inventory are used to make provision for requested production amounts; a request for the necessary production amounts is sent to the production division; the production division sends notification of finalized warehousing schedules by product type and date, based on production plans; itemized data is inserted stating, arranged by scheduled warehousing date, how much will be allocated to which sections; and priority order data files are searched and computer processing used to create scheduled warehousing files by section/division, product type, and date.

In Laid-open Japanese Patent Publication No. 7-110835, a time of delivery inquiry/confirmation system for requested production amounts of items is proposed, enabling each section of the sales division to understand on what date items for which they have received orders from their customers can be shipped. As advantages of this system, based on orders from customers, each section of the sales division itself requests production of necessary product types at necessary times, is able to grasp in a timely fashion by what date shipping will be possible, and can easily secure a shipping date within the time for delivery.

Also, in Laid-open Japanese Patent Publication Nos. 6-162057 and 6-162058, a method of manufacture is proposed in which, in order to perform accurate time-to-delivery management of coil-shaped products, an appropriate product inventory is set in advance based on the variability in past fluctuations of the usage plans of customers due to market fluctuations and variability in past fluctuations of scheduled dates of completion of manufacturing due to difficulty of manufacturing, and the shortage relative to the appropriate product inventory is produced as the required replenishment amount each time demand occurs.

And, in Laid-open Japanese Patent Publication No. 2-53553, a method is proposed in which, as a production planning method for application to small-lot, large-variety production systems, unofficial values which indicate the number of products to be shipped each day over a comparatively long period of time, and finalized values indicating the number of products to be shipped each day over a comparatively short period of time, are used to issue instructions regarding materials-in-process to production lines.

Further, in Laid-open Japanese Patent Publication No. 11-165243, a production management method is proposed in which, when establishing a production plan, the probabilities of occurrence of operation anomalies and urgent orders are predicted in advance from past operation records, and are incorporated into the production plans.

And, in Laid-open Japanese Patent Publication No. 9-73491, a method for generation of part and product inventory plans is proposed, addressing inventory amount settings for parts and products in cases where product demand fluctuates greatly or prediction of demand for a product is difficult, and taking the readiness capacity for a customer and product inventory risk as quantitative indices.

In Laid-open Japanese Patent Publication No. 5-28172, in an order point management method, an appropriate product inventory amount computation device is proposed, capable of setting order point product inventory amounts and replenish point product inventory amounts which minimize product inventory amounts, without the occurrence of excessive product inventory or shortages.

When the technologies of the prior art described in each of the above patent publications are studied, it is found that, for the technology described in the first of these, Laid-open Japanese Patent Publication No. 7-110836, the requested production amount units are months. Hence it is not possible to adequately accommodate the rapid request fluctuations of the market, which is changing in units of 10 days or of weeks. Also, there is no proposal regarding cases in which orders change after a production request has been made, and there is a need to modify the production request accordingly.

In the case of the technology described in the above Laid-open Japanese Patent Publication No. 7-110835, in order to smoothly run this system, the production department must investigate whether a production request is legitimate each time there is a production request from a sales division, and, when allocation from product inventory is possible, performs allocation from product inventory. When allocation from product inventory is not possible, the production plan must be modified, so that the burden on the production department is excessive.

In the case of the technology described in the above Laid-open Japanese Patent Publication Nos. 6-162057 and 6-162058, as is stated in Seihin Zaiko Kanri Nyuumon, by Seiichi Mito, published by the Japan Management Association, there is the dilemma that, if an attempt is made at 100% accommodation of past fluctuation variability, product inventory amounts will be increased, whereas if product inventory amounts are reduced to setting a so-called appropriate product inventory, it is impossible to completely accommodate fluctuations in demand.

In the case of the technology described in the above Laid-open Japanese Patent Publication No. 2-53553, the unofficial value is created based on past production and shipment records for a product, and addresses a comparatively long period of time. Consequently there is the difficulty that large demand fluctuations over shorter periods cannot be accurately predicted.

In the case of the technology described in the above Laid-open Japanese Patent Publication No. 11-165243, if a prediction of an urgent order is accurate, there is no need to significantly restructure the existing plan; but if the prediction is inaccurate, the existing plan must be largely restructured. Consequently the prediction accuracy is vital, and in order to make more accurate predictions it is necessary to employ some means of predicting fluctuations the occurrence of which cannot be predicted probabilistically, in addition to statistical predictions based only on past operation records; there is no clear discussion of this issue.

In the case of the technology described in the above Laid-open Japanese Patent Publication No. 9-73491, even if risks on the producer side can be minimized, the system does not maximize customer satisfaction.

In the case of the technology described in the above Laid-open Japanese Patent Publication No. 5-28172, the sales plan amount used for computation of the order point is a value based on sales records for the previous fiscal year, and depending on the industry, may not be appropriate for use as data to predict sales plan amounts.

In the article "Manufacturing Planning and Control" by Stephen C. Graves, Massachusetts Institute of Technology, X-002251808, there is discussed the acquisition and allocation of limited resources to production activities so as to satisfy customer demand over a specified time horizon. A framework for discrete-parts manufacturing planning and control is provided.

### DISCLOSURE OF THE INVENTION

Hence one object of this invention is to provide a production method and system to generate production plans which, in production plans for the production of two or more products within the same time period, can smoothly accommodate the occurrence of fluctuations in demand so as to solve the problems of the above-described technologies of the prior art, without large modifications to production plans when demand fluctuates, and without maintaining excessive product inventory in advance in order to accommodate possibly fluctuating demand.

According to one aspect of the present invention there is provided a computer-implemented production method, for producing desired product amounts of desired products having two or more product types in the same period within desired times of delivery so as to optimize production efficiency when demand for the desired products fluctuates, characterized in that the production method comprises: (a) a step in which a long production plan period is set so that said long production plan period is longer than the longest period among procurement periods for the desired products; (b) a step in which short production plan periods are set by dividing said long production plan period into a plurality of periods, wherein each of said plurality of periods is longer than the shortest procurement period and shorter than the longest procurement period among the respective procurement periods; (c) a step in which, for each of said long production plan period and said short production plan periods, respective inventory target values and predicted product inventory amounts are set by predicting demand fluctuations for the desired products; (d) a step in which, at an arbitrary point in time prior to the beginning of said long production plan period and said short production plan periods, each of product amounts, which is acquired within each of the corresponding production plan periods, is respectively divided into each of finalized amounts for which demand is finalized and each of anticipated amounts for which demand is anticipated; and (e) a step in which, among the respective product amounts in step (d), each of exceeding amounts, which is given by subtracting, from each of the corresponding predicted product inventory amounts, each of the corresponding product inventory target values, in the step (c), is produced, giving priority to each of the corresponding finalized amounts, so as to satisfy said desired times of delivery.

According to another aspect of the present invention, there is provided a computer-implemented production system, for producing desired product amounts of desired products having two or more product types in the same period within desired times of delivery so as to optimize production efficiency by smoothly accommodating demand fluctuations when demand for the desired products fluctuates, characterized by comprising: '(A) a production plan period setting means, for setting a long production plan period which is longer than the longest procurement period among procurement periods for the desired products, and for setting short production plan periods, obtained by dividing the long production plan period into two or more periods which are longer than a shortest procurement period and shorter than the longest procurement period; (B) a desired product information database for storing information relating to each of product amounts acquired within each of the corresponding production plan periods, which comprise desired product amounts and desired times of delivery, as well as information whether demand within the corresponding production plan period is finalized or is anticipated; (C) a product inventory prediction information database for storing information relating to each of predicted product inventory amounts respectively predicted within the corresponding production plan period; (D) a computation device for computing each of fluctuation amounts as each of product inventory target values for a said product within the corresponding production plan period which is predicted probabilistically and for computing each of the exceeding amounts which is given by subtracting from the predicted product inventory amount, the product inventory target value, giving priority to each of the corresponding finalized amounts based on the information stored in the desired product information database, within each of the corresponding production plan periods; (E) a product production instruction information database for storing each of the exceeding amounts computed by said computation device, together with said desired times of delivery; and (F) a plant for producing the respective exceeding amounts of said desired products based on said product production instruction information database.

To attain the above object of this invention, the basic concept is characterized in that, when creating a plan to produce two or more products within the same time period, a production plan is created for a period longer than the longest procurement period (hereafter called a long production plan period). Further, the period for which the production plan is created is divided into two or more periods which are longer than the shortest procurement period and shorter than the longest procurement period, and production plans are created for each of these periods longer than the shortest procurement period and shorter than the longest procurement period (hereafter called short production plan periods).

Further, at an arbitrary point in time prior to the beginning of the above long production plan period, products the acquisition of which is desired within the above long production plan period are divided into those for which demand is finalized within the production plan period, and those for which demand is anticipated within the production plan period; and a plan for production is created, giving priority to the above products for which demand has been finalized, to produce the amounts that are the desired product amounts minus the amount (predicted product inventory amount - product inventory target value) so as to satisfy the desired time for delivery.

Further, at an arbitrary point in time before the beginning of each of the above short production plan periods, products the acquisition of which is desired during the above short production plan periods are divided into those for which demand during the production plan period is finalized, and those for which demand is anticipated within the production plan period; and a plan for production is created, giving priority to the products for which demand has been finalized, to produce the amounts that are the desired product amounts minus the amount (predicted product inventory amount - product inventory target value) so as to satisfy the desired time for delivery.

In addition to the above production method, in a preferred embodiment, the above object is attained by a production method characterized in that amounts of product demand fluctuation possibly occurring within the production planning period and which can be predicted probabilistically are maintained as product inventory target values for the long production planning period, and for fluctuation amounts which cannot be predicted probabilistically, plans for production are created at each short production planning period.

Further, as a preferred embodiment, in the above production method, the above long production plan period is characterized as a period which exceeds the longest in-process period.

Also, a preferred embodiment is characterized in that, when, the amount of the desired product amount minus the amount (predicted product inventory amount - product inventory target value) within the above long production plan period or the above short production plan period exceeds the production capacity in the production plan period, desired product amounts are reduced with priority given to amounts of desired products for which demand is anticipated within the current period (the period in question), until the amount of the desired product amount minus the amount (predicted product inventory amount - product inventory target value) becomes equal to the production capacity within the planning period in question, and the reduced desired product amounts are added to desired product amounts for the next period in question.

Determination of predicted product inventory amounts, or comparison of desired product amounts and the amount (predicted product inventory amount - product inventory target values), may be performed at any time; however, it is preferable that these actions be performed at the time of the desired time of delivery, so that the amount (predicted product inventory amount - product inventory target values) may be handled as an excess inventory, and the necessary production amounts can be easily estimated.

The features and advantageous results of this invention will further become clear from the embodiments of this invention explained below, referring to the figures and tables.

### BRIEF DESCRIPTION OF THE DRAWINGS

Fig. 1 shows the entirety of a production system to which this invention is applied;
Fig. 2 is a drawing showing the entirety of processing step means comprising databases, corresponding to processing steps which are executed in a production system conforming to this invention;
Fig. 3 is a (first) specific embodiment processing flowchart showing the overall operation of the processing step means of Fig. 2;
Fig. 4 is a (second) specific embodiment processing flowchart showing the overall operation of the processing step means of Fig. 2;
Fig. 5 is a (third) specific embodiment processing flowchart showing the overall operation of the processing step means of Fig. 2;
Fig. 6 is a drawing showing the production plan periods used in the embodiment of Fig. 2;
Fig. 7 is an example of a production planning system illustrating a second embodiment of this invention, and similarly to the first embodiment of Fig. 2, shows the entirety of processing step means executed in this embodiment;
Fig. 8 is a (first) specific embodiment processing flowchart showing the overall operation of the processing step means of Fig. 7;
Fig. 9 is a (second) specific embodiment processing flowchart showing the overall operation of the processing step means of Fig. 7;
Fig. 10 is a (first) table showing desired product amounts and production instruction amounts in a specific example;
Fig. 11 is a (second) table showing desired product amounts and production instruction amounts in a specific example;
Fig. 12 is a (third) table showing desired product amounts and production instruction amounts in a specific example; and,
Fig. 13 is a (fourth) table showing desired product amounts and production instruction amounts in a specific example.

### BEST MODE FOR CARRYING OUT THE INVENTION

Below, embodiments of the invention are explained, referring to the drawings and tables. Embodiments explained with reference to the drawings are intended to aid understanding of the invention; application of the invention is not limited to these embodiments.

The embodiments below have been explained for the case in which products are filaments in the fiber industry. Application of this invention is not limited to such filaments, and this application can be applied to a wide range of cases in which general products are manufactured.

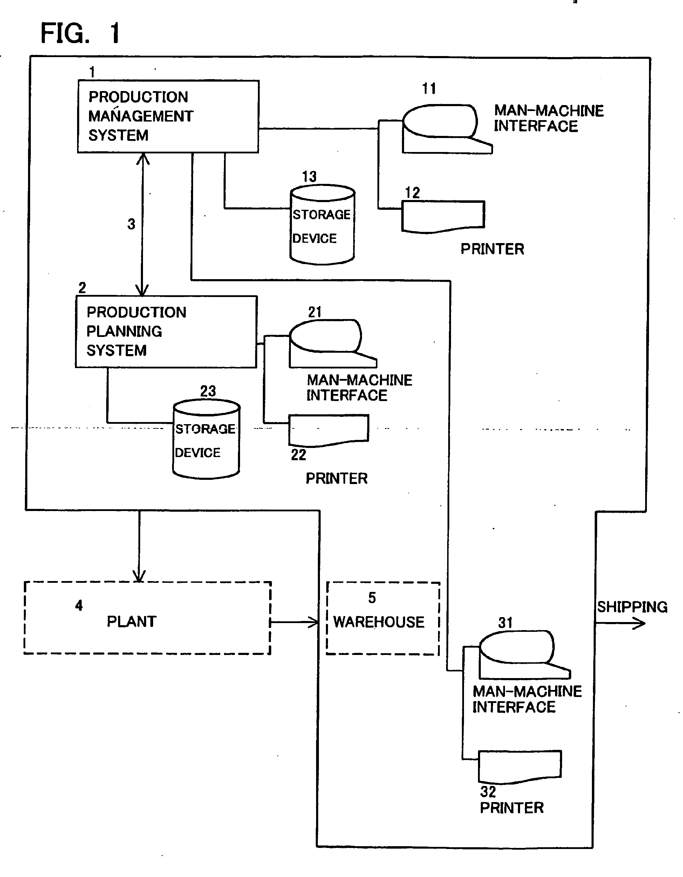

Fig. 1 shows the entirety of a production planning system to which this invention is applied. In Fig. 1, the production planning system to which this invention is applied has a production management system 1, comprising one or more computers or similar, each comprising a computation device, data storage device and similar, as well as a production planning system 2, comprising one or more computers or similar, each comprising, a computation device, data storage device and similar.

The production management system 1 and production planning system 2 are connected by a communication circuit, or floppy disks, or minidiscs, or other data transport means 3.

Production is executed in a plant 4 based on a production plan created by means of this invention. Products produced in the plant are warehoused in the warehouse 5.

Man-machine interfaces 11, 21, 31, and printers and other output devices 12, 22, 32 are connected to the above production management system 1 and production planning system 2. Storage devices 13, 23 are also connected.

Here, the production management system 1, production planning system 2, and constituent components connected to these do not merely create a production plan specifying the raw materials, facilities, product inspection plans, packing plans, and assignments of personnel engaged in production during the entire period addressed by the production plan, but can also execute various kinds of management and control accompanying the production of products, including facility operation management, production record management, and quality control. The former of these, production plans, mainly involves the production planning system 2; the latter, various management and control associated with product production, may be executed by the production management system 1, may be executed by the production planning system 2, or may be executed together by the production management system 1 and the production planning system 2.

### First Embodiment

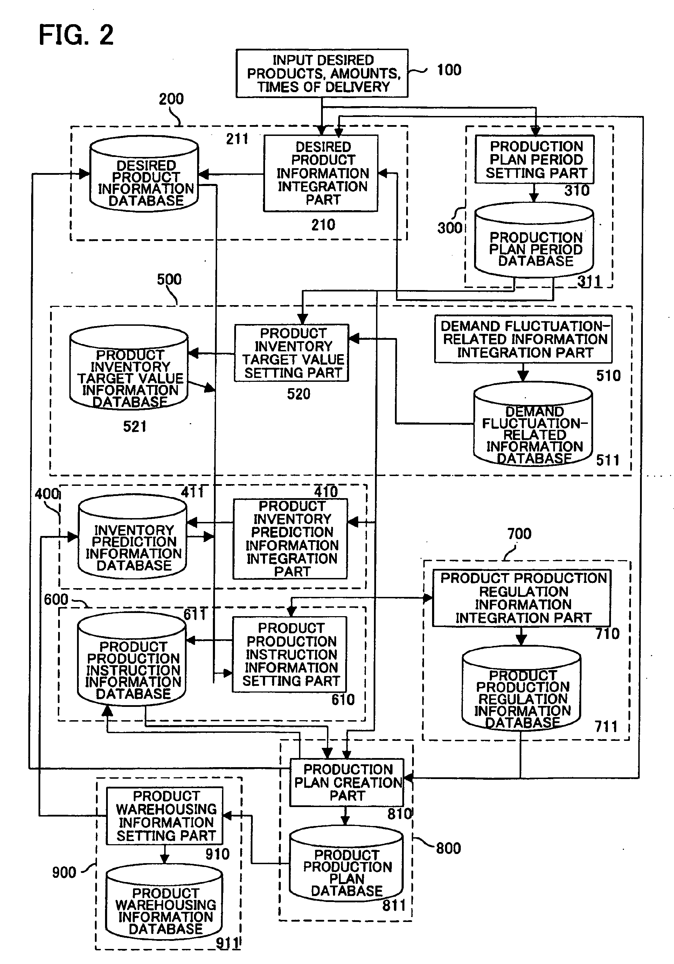

Fig. 2 shows the entirety of processing step means comprising databases, corresponding to processing steps which are executed in the production planning system of the first embodiment of this invention.

Here, the processing step comprised by each of the processing step means is controlled by the execution of programs stored in the production management system 1 and production planning system 2 of Fig. 1.

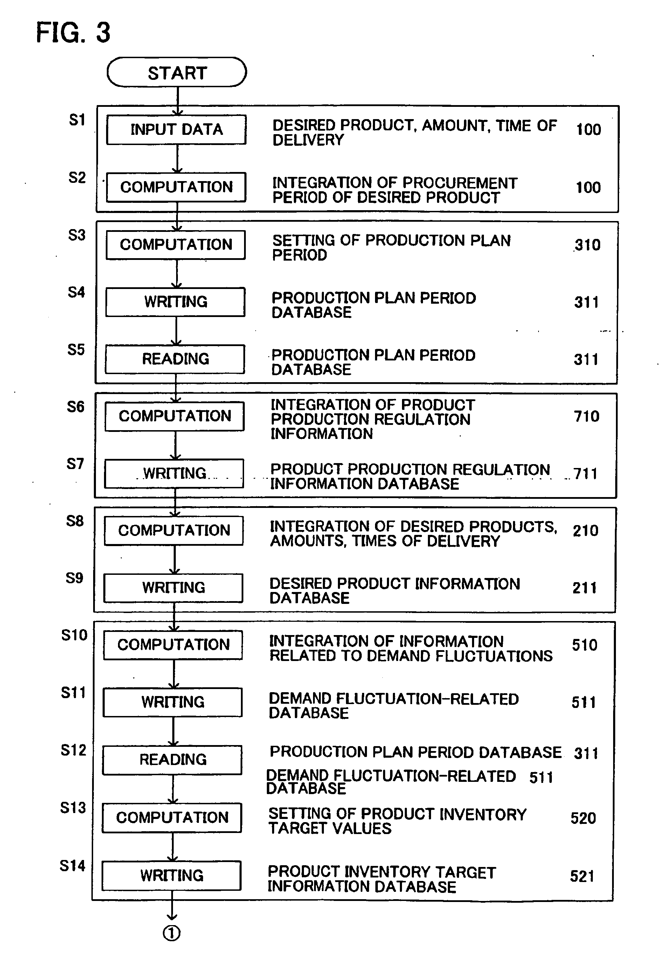

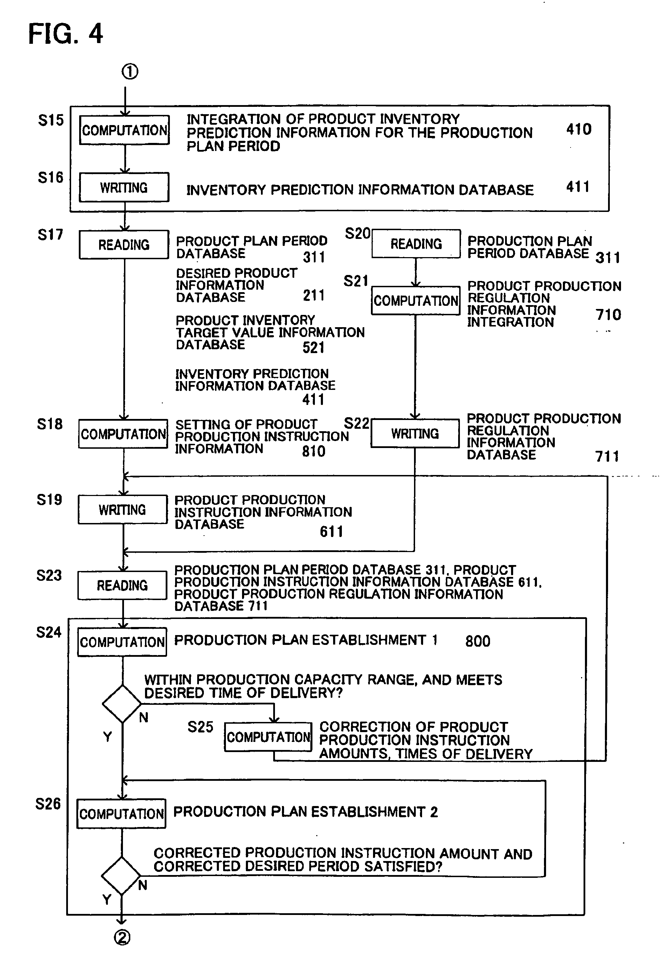

Below, the entire operation of the processing step means of Fig. 2 is explained based on the specific embodiments of processing flows shown in Figs. 3 through 5. The reference numbers in Figs. 3 through 5 indicate the processing step means of the corresponding reference numbers in Fig. 2, as well as databases (DB).

In the processing step S1 of Fig. 3, two or more desired product amounts, acquisition of which is desired, as well as the desired times to delivery, are input via the man-machine interfaces 11, 31 (in Fig. 2, this input means is represented collectively by the reference number 100). In processing step S1, products for which the desired time of delivery is not finalized are input as having non-finalized desired times to delivery.

The products acquisition of which is desired, when the products are in the final product form, are items ordered by customers or items for which orders are anticipated; in general, this information is input by a sales or business division.

When the products are intermediate materials which have not yet undergone final processing, they are ordered items or order-anticipated items from the next step, and in general, the division for the next step performs input. Otherwise, stockpiled amounts reserved to deal with urgent equipment problems in a step in question or in the preceding step, or to accommodate periodic repair periods for equipment anticipated in advance, are generally input at the step in question. Hence as shown in the figure, a plurality of man-machine interfaces 11, 31, positioned at a plurality of separate locations, are connected as input means 100 to the production management system 1.

Hence when for example sales division A receives an order for "15 tons of product type P for arrival on September 13", the data "sales division A, product type P, amount 15 tons, desired arrival date September 13" is input. Similarly, if sales division B receives an order for "8 tons of product type Q, for shipment on September 20", and if in addition there is a desire to "sell 10 tons of product type Q in the first ten days of October", the data "sales division B, product type Q, amount 8 tons, desired shipment date September 20, desired product amount 10 tons, time of delivery not finalized" is input.

And, when there is a request from the next step D to "ship 5 tons of product type R, as the raw material for the next step D, to the next step by September 25", at the next step D, the data "product type R, desired product amount 5 tons, desired shipment date September 25" is input.

Further, suppose that in October there are periodic inspections of equipment to manufacture product type Q, and that during this periodic inspection period, the product type Q cannot be produced, so that it is necessary to stockpile the amount anticipated to be demanded during this period in advance, during September, as product inventory. In this case, the data "name of the step, product type Q, desired product amount 20 tons, desired warehousing date October 1" is input.

In processing step S2 of Fig. 3, the periods necessary for obtaining raw materials for each of the desired products P, Q, R input in processing step S1, and the periods from the initiation of preparations for the respective production steps until the initiation of warehousing of the respective products, are examined in the production management system 1 based on information stored in the storage device 13, and procurement periods are computed.

Suppose that as computation results, the procurement period for product P is, for example, 4 days; the procurement period for product Q is 15 days; and the procurement period for product R is 7 days.

The production plan period setting means 300 executes processing steps S3 through S5, and the production plan setting part 310 performs computations to set the production plan period based on the computation results of processing step S2 (processing step S3).

That is, first a period longer than the longest procurement period among the procurement periods for the products P, Q, R is set as a long production plan period; and, periods (called short production plan periods) are set by dividing this long production plan period into two or more periods, which are longer than the shortest procurement period and shorter than the longest procurement period.

The production plan periods thus set are stored in the production plan period database 311 (processing step S4).

Here, as the results of computations, 30 days was set as the long production plan period, and 5 days as each of the short production plan periods. Hence the short production plan periods are the result of six equal divisions of the long production plan period.

More specifically, the long production plan period is set to begin on September 2 and to end on October 1, and six short production plan periods were set, from September 2 to September 6; from September 7 to September 11; from September 12 to September 16; from September 17 to September 21; from September 22 to September 26; and from September 27 to October 1.

In processing step S4, the long production plan period set from September 2 to October 1, and the short production plan periods set from September 2 to September 6, from September 7 to September 11, from September 12 to September 16, from September 17 to September 21, from September 22 to September 26, and from September 27 to October 1, are written to the production plan period database 311.

Next, in processing step S5 the production plan period setting means 300 opens the production plan period database 311, reads the long production plan period and short production plan periods which are the periods (production plan periods) to be addressed in creating production plans, and in processing step S6, the product production regulation information integration part 710 performs computation to integrate the product production regulation information for these periods.

In this specification, "production plan period" refers, as above, to a long production plan period and/or a short production plan period.

The objects of computation include information related to raw materials used for the production of products, such as for example the constitution of raw materials used, consumption units, product inventory amounts, the period required from order to arrival, and similar; information related to equipment used for the production of products, such as for example the production capacity of the above equipment, production conditions such as temperatures, pressures, and speeds, from when equipment will be available for use, and preparation of auxiliary parts for production using this equipment, and similar; information relating to manpower for production of products, such as for example labor productivity to obtain the products, the number of personnel and the time necessary for preparations for production, the number of personnel and the time necessary for cleanup after completion of production, and similar; information related to product inspections, such as for example inspection items and frequency, and the time required for inspections; and, information related to the time required from the start of production until the warehousing of products, as well as information for determining of the materials required for packing, such as the packing form, gross weight, and similar.

These pieces of information must be considered when creating a production plan. In processing step S7, the computation results of processing step S6 are written to the product production regulation information database 711.

On the other hand, in processing step S8, the desired product information storage means 200 performs integration of the amount and time of delivery of products whose acquisition is desired input in processing step S1, based on the production plan periods previously written to the production plan period database 311 in processing step S4.

At this time, in processing step S1 desired time-to-delivery data has been input in various forms such as in warehousing date, destocking date, and arrival date from various divisions. Computation in the processing step S8 is performed, therefore, referring to the product production regulation information database 711. In these computations, standardization on one of the different times to delivery is performed.

Here, an example is indicated in which all data is standardized on the warehousing date; however, it is acceptable to perform standardization on the destocking date or on the arrival date as well. The following Table 1 shows an example of computation results in processing step S8.

**Table 1**

| No. | Division | Product Type | Amount | Desired Time of delivery | |
|---|---|---|---|---|---|
| | | | | Desired Warehousing Time of delivery | State |
| 1 | Sales Division A | P | 15 tons | Sept. 9 | Finalized |
| 2 | Sales Division B | Q | 8 tons | Sept. 18 | Finalized |
| 3 | Sales Division B | Q | 10 tons | Oct. 1 | Not finalized |
| 4 | Next step D | R | 5 tons | Sept. 24 | Finalized |
| 5 | Current step | Q | 20 tons | Oct. 1 | Finalized |

In the table, the desired time of delivery (desired time to warehousing) for product type Q in No. 3 is, in processing step S1, input as time of delivery not finalized; hence in the computations of processing step S8, the end of the production plan period is taken to be October 1, and the information that the time of delivery is not finalized is added. This computation result is written to the desired product information database 211 in processing step S9.

Next, in processing step S10, information relating to fluctuations is integrated in the demand fluctuation-related information integration part 510 of the product inventory target value setting means 500.

Here, fluctuations in demand for a product which may occur within the production plan period are changes in demand prediction. As stated in Juyou no Bunseki to Yosoku, by Yasuo Matsushima, published by The Nikkan Kogyo Shimbun, Ltd., such fluctuations include (1) trend fluctuations such as rising or falling changes over an extended period; (2) cyclical fluctuations over a period of from 3 to 15 years approximately; (3) periodic fluctuations, of which seasonal fluctuations are representative; and (4) other irregular fluctuations the occurrence of which may be regarded as statistically random.

Of these, the extent of fluctuations resulting from the combination of the first three, (1) through (3), can be estimated from time-series analyses of past demand. And, fluctuations can also be estimated through statistical processing of demand records for each of a plurality of production plan unit periods for one product.

Product inventory target values refer to fluctuation amounts, computed in this way, which there is a need to maintain constantly.

Of the above, there are cases in which (4) can be predicted over the short-term future; hence there are cases in which it is effective, in long-term production planning, to consider only the above (1) through (3), and to set short-term production plans incorporating (4). Also, in many cases it is effective to adjust the above (1) through (3) with human intuition and experience added.

Upon performing statistical analyses of past demand fluctuations for the product types P, Q, product inventory target values of 4 tons for product type P and 8 tons for product type Q are computed; production of product type R has just begun, and there is insufficient data for statistical analysis, but if demand grows, it is predicted that it would be sufficient to maintain a product inventory target of 4 tons.

Table 2 shows the results of computations of product inventory target values by the demand fluctuation-related information integration part 510 in processing step S10.

**Table 2**

| Product Type | Fluctuating Inventory |
|---|---|
| P | 4 tons |
| Q | 8 tons |
| R | 4 tons |

Then, in processing step S11, the computation results of Table 2 are written to the demand fluctuation-related information database 511.

In processing step S12, the product inventory target setting part 520 opens the production plan period database 311 and demand fluctuation-related information database 511, and reads both the long production plan period and short production plan periods, as well as product inventory target values. In processing step S13, the product inventory target value setting part 520 computes product inventory target values for the production plan periods, based on these values. Demand for product type R will not grow before September 16, and so computation results are as shown in Table 3.

Table 3 shows results for short production plan periods.

The product inventory target values are no more than target values, and do not necessarily mean that the values must be maintained at any given time within the period below.

**Table 3**

| Product Type | Sept. 2 - Sept. 16 | Sept. 17 - Oct. 1 |
|---|---|---|
| P | 4 tons | 4 tons |
| Q | 8 tons | 8 tons |
| R | 0 | 4 tons |

This data is written to the product inventory target value information database 521 in processing step S14.

In processing step S15, the product inventory prediction information integration part 410 of the product inventory prediction information storage means 400 performs integration of product inventory prediction information in the production plan period. That is, in the embodiment, daily trends in predicted product inventory amounts are computed, by product type, from September 2 to October 1. Computations at this point, as a matter of course, do not reflect the computation results of processing step S8 at all. The computation results of this processing step S15 are written, as predicted product inventory amounts, to the product inventory prediction information database 411 in processing step S16.

In processing step S17, the product production instruction information setting part of the product production instruction information storage means 600 opens the product plan period database 311, desired product information database 211, product inventory target value information database 521, and product inventory prediction information database 411, reads a production plan period, and further reads desired product information, product inventory target value information, and product inventory prediction information pertaining to this period.

Based on the read values, in processing step S18, computations are performed to set product production instruction information. Through these computations, the difference between the product amount (desired product amount) AAA acquisition of which is desired within the production plan period, and the predicted product inventory amount BBB at the time of the desired time of delivery less the product inventory target value CCC corresponding to demand fluctuations which may occur within the production plan period, or {AAA- (BBB-CCC)}, is calculated as the amount which must be produced within the production plan period.

Here, when the amount resulting from subtraction of the product inventory target value to accommodate demand fluctuations which may occur within the production plan period from the predicted product inventory amount at the desired time of delivery is larger than the product amount acquisition of which is desired at the desired time of delivery, the production instruction amount for the product is taken to be zero.

On the other hand, when the predicted product inventory amount within the production plan period is less than the product inventory target value to accommodate demand fluctuations which may occur within the production plan period, the amount of the deficiency is taken to be the production instruction amount up to the time of the deficiency, and the desired time of delivery is computed as finalized.

In this case, the current processing step to produce the product is regarded as the division desiring production. Computation results for production instruction amounts are shown in Table 4.

**Table 4**

| No. | Division | Product Type | Production Instruction Amount | Desired Time of delivery | |
|---|---|---|---|---|---|
| | | | | Time of delivery | State |
| 1 | Sales Division A | P | 15 tons | Sept. 9 | Finalized |
| 2 | Sales Division B | Q | 0 | Sept. 18 | Finalized |
| 3 | Sales Division B | Q | 10 tons | Oct. 1 | Not finalized |
| 4 | Next step D | R | 5 tons | Sept. 24 | Finalized |
| 5 | Current step | Q | 20 tons | Oct. 1 | Finalized |
| 6 | Current step | R | 4 tons | Sept. 17 | Finalized |

In the table, the predicted product inventory amount for product type Q on September 18, the desired time of delivery for No. 2, is 16 tons; even if the product inventory target value is subtracted, it is found that the entire desired product amount of 8 tons can be provided from the expected product inventory amount.

With respect to No. 1, because the predicted product inventory amount for product type P on the desired time of delivery of September 9 is the same as the product inventory target value of 4 tons, the production instruction amount is the same 15 tons as the desired product amount.

No. 6 is the result of computation to secure the product inventory target value stated in Table 3 as the predicted target inventory amount.

In processing step S19, this result is written to the product production instruction information database 611 of the product production instruction information storage means 600.

In processing step S20, the product production regulation information integration part 710 of the product production regulation information storage means 700 opens the production plan period database 311, reads the period for which the production plan is to be created, and in processing step S21 performs integration computations of the product production regulation information for this period. When the computation result is the same as for processing step S6, there is no need to again perform the same computations in processing step S21, and the computation result of processing step S6 may be used without modification in processing step S21.

In processing step S22, this computation result of processing step S21 is written to the product production regulation information database 711. In processing step S22, writing is performed to update the product production regulation information database 711 only when the computation result of processing step S21 is different from that of processing step S6.

In processing step S23, the production plan creation part 810 of the production plan creation means 800 opens the production plan period database 311, product production instruction information database 611, and product production regulation information database 711, and reads the period for which the production plan is to be created. Also, product production instruction information and product production regulation information for the period in question are read.

Based on this information, in processing step S24 the production plan creation part 810 of the production plan creation means 800 begins creation of the production plan.

First, a check is performed to determine whether the product production instruction amounts and desired times of delivery are legitimate. That is, checks are performed to determine whether the production instruction amounts to satisfy the desired times of delivery within the production plan period do not exceed the production capacity, and if the production capacity is exceeded, how far the times of delivery should be delayed to accommodate this fact; and in processing step S25, the production instruction amounts and times of delivery for the product in question are corrected.

At this time, the order in which times of delivery are corrected is from the latest time of delivery, and from items which, in the desired product information database 211 of the desired product information storage means 200, are described as having a time of delivery which is not finalized.

In cases where the total amount of the production instruction amount exceeds the production capacity even after cutting down the production instruction amounts for not-finalized desired times of delivery registered at the end of the production plan period, the production instruction amounts for which desired times of delivery are finalized within the production plan period are cut down, starting with later desired times of delivery, to perform adjustments such that the total production instruction amounts within the production plan period do not exceed the production capacity.

In addition, adjustments of desired times of delivery are performed within the production plan period such that momentary production instruction amounts within the production plan period do not exceed the upper limit of momentary production capacity.

At this time, any production instruction amounts remaining in the production plan period for which the desired times of delivery are not finalized are changed to have finalized times of delivery. These adjustment results are returned to processing step S19 and written to the product production instruction information database 611.

At the same time, as the result of adjustments, the production instruction amounts which have been cut down in the production plan period are removed from the production plan period in the desired product information database 211, and the desired product amounts which have been cut down are stored for the next production plan period. At this time, the desired times of delivery are positioned at the beginning of the next production plan period. The production plan is then created based on this corrected production plan instruction information. Table 5 shows the adjustment results in this embodiment.

**Table 5**

| No. | Division | Product Type | Corrected Production Instruction Amount | Desired Time of delivery | |
|---|---|---|---|---|---|
| | | | | Time of delivery | State |
| 1 | Sales Division A | P | 15 tons | Sept. 9 | Finalized |
| 2 | Sales Division B | Q | 0 | Sept. 18 | Finalized |
| 3 | Sales Division B | Q | 5 tons | Oct. 1 | Finalized |
| 4 | Next step D | R | 5 tons | Sept. 24 | Finalized |
| 5 | Current step | Q | 20 tons | Oct. 1 | Finalized |
| 6 | Current step | R | 4 tons | Sept. 17 | Finalized |
| 31 | Sales Division B | Q | 5 tons | Oct. 2 | Not finalized |

In this table, the times of delivery are the same for No. 3 and for No. 5, but as shown in Table 4, No. 5 is in the finalized state, whereas No. 3 is not finalized, so that No. 5 is allocated in advance.

The production instruction amount of 10 tons for No. 3 is corrected to 5 tons, and No. 31 is set to be the 5 tons that has been cut down from No. 3, as an amount brought forward to the next production plan period.

This means that the production capacity for product type Q is 25 tons, and 20 tons is allocated to No. 5, so that there is a remaining 5 tons of production capacity.

This corrected data is written to the product production instruction information database 611 in processing step S19, and modified items in the desired product information database 211 are marked.

Next, in processing step S26, in production plan creation part 810, the product production regulation information database 711 is used to set execution periods indicating from when production of individual products is performed, execution sites indicating where production is to be performed, execution personnel indicating who are to perform the production, what raw materials are to be used, what product inspections performed, and what kind of packing materials are to be used, in such a manner as to satisfy all corrected production instruction amounts and corrected times to delivery. It is preferable that the resulting settings be displayed on, for example, a Gantt chart along a common time axis.

In processing step S27, the production plan created in processing step S26 is written to the product production plan database 811.

In processing step S28, the product warehousing information storage means 900 opens the product production plan database 811, and reads the production plan period in question and the product production plans for that period. In processing step S29, the product warehousing information setting part 910 computes and sets shipment plans so as to satisfy the packing form for shipment, warehousing plans by each packing unit and desired shipment date or desired arrival date, based on the created production plans. And in processing step S30, the computation results are written to the product warehousing information database 911 and the product inventory prediction information database 411.

The above production plan has been created and production begins from September 2. However, whereas "15 tons of product type P for arrival on September 13" had been input on September 6 by the Sales Division A, further data was input to modify this to "17 tons of product type P for arrival on September 13" (1), due to subsequent demand fluctuations.

In addition, the Sales Division A also inputs the additional data "8 tons of product type P for arrival on September 24"(2). Table 6 shows the computation results in processing step S8 on September 6, which is the first occasion for creation of a production plan after September 7 for a period that is longer than the shortest procurement period and shorter than the longest procurement period.

**Table 6**

| No. | Division | Product Type | Amount Corrected Production Instruction Amount | Desired Time of delivery | |
|---|---|---|---|---|---|
| | | | | Time of delivery | State |
| 1 | Sales Division A | P | 17 tons | Sept. 9 | Finalized; of which 2 tons added |
| 11 | Sales Division A | P | 8 tons | Sept. 20 | Finalized |
| 2 | Sales Division B | Q | 8 tons | Sept. 18 | Finalized |
| 3 | Sales Division B | Q | 5 tons | Oct. 1 | Finalized |
| 4 | Next step D | R | 5 tons | Sept. 24 | Finalized |
| 5 | Current step | Q | 20 tons | Oct. 1 | Finalized |
| 31 | Sales Division B | Q | 5 tons | Oct. 2 | Not finalized |

Upon setting product production instruction information in the processing flow from the above processing steps S9 through S18, in response to (1), production was already ended on September 5, and instead of resuming production again from September 7, 2 tons are allotted from among the predicted product inventory amount of 4 tons; and in response to (2), a production plan is created including the reduction by 2 tons in product inventory to accommodate (1).

The results are shown in Table 7.

**Table 7**

| No. | Division | Product Type | Production Instruction Amount | Desired Time of delivery | |
|---|---|---|---|---|---|
| | | | | Time of delivery | State |
| 1 | Sales Division A | P | 15 tons | Sept. 9 | Finalized; 2 tons added from inventory |
| 11 | Sales Division A | P | 10 tons | Sept. 20 | Finalized; 2 tons added from inventory |
| 2 | Sales Division B | Q | 0 | Sept. 18 | Finalized |
| 3 | Sales Division B | Q | 5 tons | Oct. 1 | Finalized |
| 31 | Sales Division B | Q | 5 tons | Oct. 2 | Not finalized |
| 4 | Next step D | R | 5 tons | Sept. 24 | Finalized |
| 5 | Current step | Q | 20 tons | Oct. 1 | Finalized |
| 6 | Current step | Q | 4 tons | Sept. 17 | Not finalized |

Based on the computation results of processing step S18, processing steps S19 through S30 are executed, and a production plan for September 7 through October 1 is created.

On September 23, there is a request, from the next step D, to "increase the shipment amount of product type R to next step D on September 25 to 9 tons". Compared with the information of the most recently created production plan, there is an increase of 4 tons, and moreover, the demand fluctuation has occurred at the point in time at which production within the production plan period is halfway completed; hence it is decided to allot this additional amount from the predicted product inventory amount, and to reexamine the production plan on September 26 when creating the production plan for September 27 and later.

Hence the computation results for processing step S8 on September 26 are as shown in Table 8.

**Table 8**

| No. | Division | Product Type | Amount | Desired Time of delivery | |
|---|---|---|---|---|---|
| | | | | Time of delivery | State |
| 3 | Sales Division B | Q | 5 tons | Oct. 1 | Finalized |
| 41 | Current step | R | 4 tons | Oct. 1 | Finalized |
| 5 | Current step | Q | 20 tons | Oct. 1 | Finalized |
| 31 | Sales Division B | Q | 5 tons | Oct. 2 | Not finalized |

Upon computing product production instruction information according to the processing steps S9 through S18, the results of Table 9 are obtained.

**Table 9**

| No. | Division | Product Type | Amount | Desired Time of delivery | |
|---|---|---|---|---|---|
| | | | | Time of delivery | State |
| 3 | Sales Division B | Q | 5 tons | Oct. 1 | Finalized |
| 41 | Current step | R | 4 tons | Oct. 1 | Finalized |
| 5 | Current step | Q | 20 tons | Oct. 1 | Finalized |
| 31 | Sales Division B | Q | 5 tons | Oct. 2 | Not finalized |

Next, based on the computation results of the above processing step S18, processing steps S19 through S30 are again executed, and a production plan for September 27 through October 1 is created.

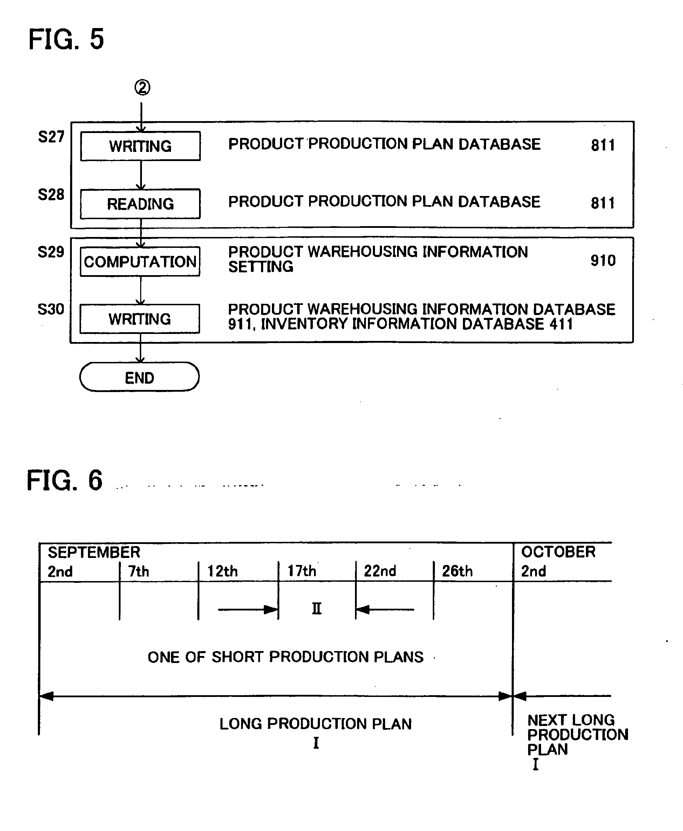

Fig. 6 shows the production plan period used in the above embodiment. In this embodiment, the period (long production plan period) I longer than the longest procurement period, which is used when creating a plan for production of two or more products within the same period, is divided into six equal periods (short production plan periods) II longer than the shortest procurement period and shorter than the longest procurement period, and the production plan is created. The present invention is not limited to this, and the number of divisions is not limited to six, nor is it necessary that the division be into equal periods.

If the condition of being longer than the shortest procurement period and shorter than the longest procurement period is satisfied, division into periods of two or more different lengths is acceptable.

Here, in order that it be understood that each of the elements in the above embodiment is not limited by the above embodiment, a general explanation of each of the elements of the above embodiment is provided.

The following relates to the above embodiment, and of course does not limit the scope of claims of this invention.

### Products

In the above embodiment, examples of "products" may be filaments, staple fibers, twisted yarns, gray fabrics and woven fabrics in the fiber industry; materials for automobile steel parts, and materials for appliance steel parts in the steel industry; and roll paper, paper sheets and similar in the papermaking industry. However, products are not limited to the above examples.

### Procurement Period

The "procurement period" for a certain product is the period from the beginning of preparation of raw materials and processing steps, until the beginning of warehousing of the product; this of course includes normal operation wait time and normal transport wait time. Even if the same production equipment is used, the procurement period can change depending on the mode of production. Hence procurement periods are usually determined according to a production plan already created.

### Fluctuation of Product Demand

"Product demand fluctuations" which may occur during a production plan period are changes in demand predictions. As stated in Juyou no Bunseki to Yosoku, by Yasuo Matsushima, published by The Nikkan Kogyo Shimbun, Ltd., such fluctuations include trend fluctuations such as rising or falling changes over an extended period; cyclical fluctuations over a period of from 3 to 15 years approximately; periodic fluctuations, of which seasonal fluctuations are representative; and other irregular fluctuations the occurrence of which may be regarded as statistically random.

Of these, the extent of fluctuations resulting from the combination of the first three can be estimated from time-series analyses of past demand. And, fluctuations can also be estimated through statistical processing of demand records for each of a plurality of production plan unit periods for one product.

Demand fluctuations may be estimated based on these fluctuation estimates, with predictions of future fluctuations in business conditions and predictions of market trends included.

In cases where product production has just begun, and statistic demand fluctuation records cannot be obtained due to the fact that the number of past demand records is insufficient for statistical processing, if some other method of prediction can be used to anticipate demand fluctuations, these anticipated values may be adopted as demand fluctuations.

Assuming that demand fluctuations obtained in this way will probably occur, and allowing for the possibility that when demand fluctuations above a certain level occur there will be no product inventory and shortages will occur, a production plan is created for a long production plan period, taking, as the product inventory target value, an amount that can accommodate the demand fluctuations below the certain level.

At this time, it is preferable that a procurement period be considered that is peculiar to each product when setting product inventory target values. As the production plan unit period when performing statistical processing of demand records, it is preferable that a short production plan period be used.

As the product inventory target values set in this way for individual products, the same values may be employed over a plurality of long production plan periods, or different values may be set at the beginning of each new long production plan period, or they may be changed and reset within a given long production plan period.

Fluctuation amounts which cannot be predicted probabilistically occur when, after once creating a production plan based on demand predictions, changes in demand reach demand fluctuation amounts which exceed the above-described certain level. Also, in cases where production of a product has just begun and there are too few past demand records to enable statistical computation of demand fluctuations, and in addition some other prediction cannot be used to anticipate fluctuations in demand, or in cases where past records indicate that demand occurs only scarcely and it is judged expedient not to maintain demand fluctuation amounts as product inventory in light of economic laws, changes in demand predictions occurring after a production plan has once been created based on demand predictions are equivalent to fluctuation amounts which cannot be predicted probabilistically.

### Desired Product Information Storage Means 200

The desired product information storage means 200 is means by which a department desiring acquisition of a product within the production plan period inputs the desired product amount and desired time of delivery, and this data is stored. As the desired time of delivery, the warehousing date, destocking date, arrival date, or other representation method may be used; in order to avoid confusion, it is preferable that data be standardized on one of these for input.

It is preferable that, when a destocking date is specified, a correction be made for the time required from warehousing to destocking and that the warehousing date computed, and that this warehousing date be stored as the desired time of delivery; that, when an arrival date is specified, a correction be made for the time required from warehousing to destocking and the time from shipment to arrival and that the warehousing date be computed, and that this warehousing date be stored as the desired time of delivery; and that when a warehousing date is specified, that this warehousing data be stored without modification as the desired time of delivery

Here, when a time of delivery is not finalized within the production plan period, the end of the production plan period be stored as the desired time of delivery simultaneously with the unfinalized time of delivery information. Data may be input at any time before the production plan period and before creation of the production plan.

Hence when for example production plan periods are one-month units, input may be performed by the day before the creation of the production plan for a given month, at the latest; and when production plan periods are one-week units, input may be performed by the day before the creation of the production plan for a given week, at the latest.

In cases where a plurality of production plan periods are used, with larger production plan periods in one-month units and a given month is divided into and managed in one-week units, it is sufficient to perform input by the day before creation of production plans for the production plan period for the one-month unit and the production plan period for the first one-week period.

As the production plan period advances to the second week and then to the third week, the desired product amounts and desired times of delivery, at least, are input for each of these weeks by the day before creation of production plans for each of these one-week periods, and more preferably, desired product amounts and desired times of delivery are input and stored for the given weeks and also for subsequent weeks. At this time, the data previously input for the one-month period corresponding to the second week or to the third week, as well as subsequent weeks, is updated to the latest data. As explained above, items for which the time of delivery is not finalized within the production plan period are handled as having a desired time of delivery at the end of the production plan period.

The above is for cases in which the combination of long production plan periods and short production plan periods is that of months and weeks; clearly, when the combination is months and ten-day periods, or months and days, or weeks and days, or years and months, or similar, the respective combinations need only be inserted in place of the above months and weeks.

### Production Plan Period Setting Means 300

The production plan period setting means 300 is means for setting and for storing both long production plan periods and short production plan periods. In this setting of production plan periods, the procurement periods for products production of which is predicted to be desired are stored in advance within the system. Specific periods may be added to these procurement periods, and long and short production plan periods may be set automatically each time in the system; or, after products the acquisition of which is desired are known, the procurement periods for these products may be compared, and long and short production plan periods may be set manually outside the system, and these settings may be stored.

Or, when it is possible to employ experience over many years to set periods in advance such that long production plan periods are longer than the longest procurement period and short production plan periods are longer than the shortest procurement period and shorter than the longest procurement period, these values may be set and stored in advance.

If the production plan period is too long, the extent to which demand in the second half of the production plan period becomes uncertain will be increased, and the probability that demand will change after the production plan is created will be higher. Then the production inventory target value must be maintained at a higher value in order to accommodate fluctuations, and even in this case, fluctuations which cannot be accommodated by the product inventory target value will occur, with the unsatisfactory result that occasions for recreating the production plan will be increased. Conversely, if the production plan period is too short, a single series of production plan periods will be shorter, resulting in production with too often interruptions included therein and reduced production efficiency.

In order to resolve these contradictions and simultaneously achieve both high production efficiency and minimized product inventory target values, it is preferable that long production plan periods and short production plan periods are used as production plan periods, and that the long production plan periods be divided into a plurality of short production plan periods. In such a case, the long production plan period must be set to be longer than the longest procurement period.

If the long production plan period is shorter than the procurement period, situations will occur in which warehousing of products is not begun within the long production plan period for which a plan is created, which is undesirable. As the short production plan period, a period of arbitrary length must be set which is longer than the shortest procurement period, and shorter than the longest procurement period. If a short production plan period is shorter than the shortest procurement period, situations will occur in which no warehousing of products is begun within the short production plan period for which a plan is created, so that such a period is undesirable as an object for production plan creation.

### Product Inventory Prediction Information Storage Means 400

The product inventory prediction information storage means 400 stores trends in product inventory in a time series in past, present, and future production plan periods. Whereas past and present values are definite, the future part is, of course, information predicting product inventories. Hence in production plans related to this invention, because future production is primarily addressed, this is called "product inventory prediction information". Hence where product inventory prediction amounts are concerned, when creating a production plan it is preferable that computations be performed with definite values substituted for past portions.

In light of the purpose of use, there is no need for the plans to be continuously created; creation over fixed intervals, or discontinuously over indefinite intervals, is acceptable.

More specifically, in cases where short production plan periods are a month, or a period longer than a month such as a half-year or a year, it is sufficient to store product inventory prediction amount information in weekly units; and when short production plan periods are weeks or ten-day periods, it is sufficient to store product inventory prediction amount information in units of days. When Saturdays and Sundays are days of inactivity, there is no need to store product inventory prediction amount information for such inactive days.

When short production plan periods are in day units, it is preferable that product inventory prediction amount information be stored in hourly units. In essence, it is desirable that product inventory prediction amount information be stored in period intervals shorter than the short production plan intervals.

Further, there is a function for output of product inventory prediction information for a production plan period. The output information may be in the form of a table, or may be in the form of a graph, indicating product inventory prediction amounts by the period intervals in which product inventory prediction information is stored. Either form is perfectly acceptable.

### Product Inventory Target Value Setting Means 500

The product inventory target value setting means 500 sets and stores amounts which are maintained as product inventory target values in advance within a long production plan period, in order that the product inventory can be allotted to fluctuation amounts when there occur demand fluctuations which can be predicted probabilistically, addressing fluctuations in demand for products which may occur within a production plan period.

To set these values, first demand fluctuations are estimated. That is, among fluctuation trends, which are upward or downward fluctuations over a long period; cyclic fluctuations with a period of from 3 to 15 years approximately; periodic fluctuations, of which seasonal fluctuations are representative; and irregular fluctuations, the occurrence of which may be regarded as probabilistically random, demand fluctuations combining the first three of these are estimated based on time-series analyses of past demand. In addition, by performing statistical processing of demand records for each of a plurality of production plan unit periods for a given product, demand fluctuations can be estimated. To these fluctuation estimates, forecasts of future business conditions and forecasts of market fluctuations may be added, and demand fluctuations may be estimated once again.

In cases where product production has just begun, and statistic demand fluctuation records cannot be obtained due to the fact that the number of past demand records is insufficient for statistical processing, if some other method of prediction can be used to anticipate demand fluctuations, these anticipated values may be adopted as demand fluctuations.

Next, demand fluctuations determined in this way are taken to occur probabilistically, and assuming that when demand fluctuations exceed a certain level there will be no product inventory and that the occurrence of shortages will be tolerated, the amount enabling accommodation of demand fluctuations below this level is taken to be the product inventory target value, and this amount is set and stored so as to be maintained for the long production plan period.

In such a case, it is preferable that a procurement period be considered that is peculiar to each product, when setting product inventory target values. Hereupon, as the production plan unit period when performing statistical processing of demand records, it is preferable that a short production plan period be used. The same value may be set and stored throughout a plurality of long production plan periods in the product inventory target value setting means, different values may be reset and stored when long production plan periods change, and different values may be reset and stored within a single long production plan period, based on the thus set values to each of the products.

### Product Production Instruction Information Storage Means 600

The product production instruction information storage means 600 computes, as the amount which must be produced within the production plan period, the difference between the product amount acquisition of which is desired within the production plan period, and the predicted product inventory amount at the time of the desired time of delivery less the product inventory target value to accommodate demand fluctuations which may occur within the production plan period, and stores this together with the desired time of delivery.

When the amount obtained by subtracting the product inventory target value to accommodate demand fluctuations which may occur within the production plan period from the predicted product inventory amount at the desired time of delivery is greater than the product amount acquisition of which is desired at the desired time of delivery, the production instruction amount for the product acquisition of which is desired is treated as zero. On the other hand, when the predicted product inventory amount within the production plan period is less than the product inventory target value to accommodate demand fluctuations which may occur within the production plan period, the deficient amount is computed as a production instruction amount up to the time of the deficiency. This means also has means for output of the computed product amount acquisition of which is desired and the desired time of delivery.

### Product Production Regulation Information Storage Means 700

The product production regulation information storage means 700 stores regulation information related to production of the product, which is input prior to creation of the production plan.

This information is information which must be taken into consideration when creating a production plan, including information related to raw materials used for the production of products, such as for example the constitution of raw materials used, consumption units, product inventory amounts, the period required from order to arrival, and similar; information related to equipment used for the production of products, such as for example the production capacity of the equipment, production conditions such as temperatures, pressures, and speeds, from when equipment will be available for use, and preparation of auxiliary parts for production using this equipment, and similar; information relating to manpower for production of products, such as for example labor productivity to obtain the products, the number of personnel and the time necessary for preparations for production, the number of personnel and the time necessary for cleanup after completion of production, and similar; information related to product inspections, such as for example inspection items and frequency, and the time required for inspections; and, information related to the time required from the start of production until the warehousing of products, as well as information for computation of the materials required for packing, such as the packing form, gross weight, and similar.

### Production Plan Creation Means 800

The production plan creation means 800 specifies the raw materials and equipment used, product inspection plans, packing plans, and the assignment of personnel engaged in production for the entirety of the production plan, creates the production plan, and outputs the results.

The system for this production plan creation may take the form of an expert system, a decision-making support system, or other forms. In essence, it need only be a system capable of creating production plans. This functional device first checks whether product production instruction amounts and times of delivery are legitimate. That is, checks are performed to determine whether production instruction amounts to satisfy desired times of delivery within the production plan period do not exceed production capacities, and if production capacities are exceeded, whether this can be accommodated by delaying times of delivery, to correct production instruction amounts and times of delivery for the product in question.

In this occasion, the order of correction of times of delivery is from the latest times of delivery, and from items which, in the desired product information storage means, are described as having a time of delivery which is not finalized. If the total production instruction amount exceeds the production capacity even when the production instruction amount with unfinalized desired time of delivery, registered at the end of the production plan period, is cut down, production instruction amounts the desired time of delivery is finalized within the production plan period are cut down, beginning from later desired times of delivery, and adjustments performed until the total production instruction amount within the production plan period does not exceed the production capacity.

Also, desired times of delivery within the production plan period are also adjusted such that the momentary production instruction amounts within the production plan period do not exceed the upper limit of the momentary production capacity. The results of these adjustments are stored in the product production instruction information storage means 600.

At the same time, production instruction amounts cut down from the production plan period as a result of adjustments are removed from the production plan period in the desired product information storage means 200, and the cut desired product amounts are stored for the next production plan period. At this time, the desired times of delivery are at the beginning of the next production plan period. The production plan is generated based on the product production instruction information corrected in this way.

### Product Warehousing Information Storage Means 900

The product warehousing information storage means 900 receives the production plan created by the production plan creation device and creates warehousing plans by packing form and packing unit for shipment, and performs shipment planning so as to satisfy desired times of delivery.

There are also means for output of changed information regarding deviations from the initial desired product amounts and times of delivery resulting from production instruction amounts and times of delivery corrected by the production plan creation means, as well as packing units for product shipping, and for notification to related divisions.

### Second Embodiment

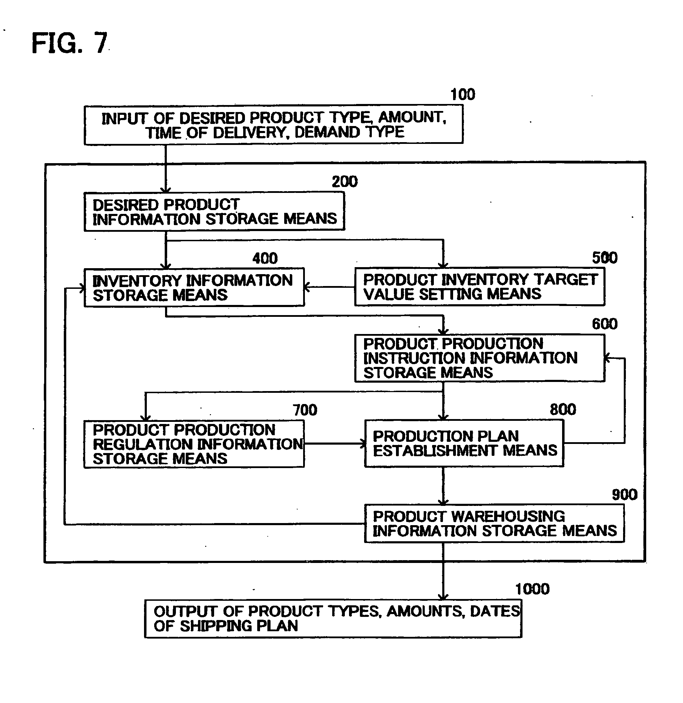

Fig. 7 is an example of a production planning system which illustrates a second embodiment of this invention; similarly to the first embodiment in Fig. 2, the entirety of processing step means executed in this embodiment is shown.

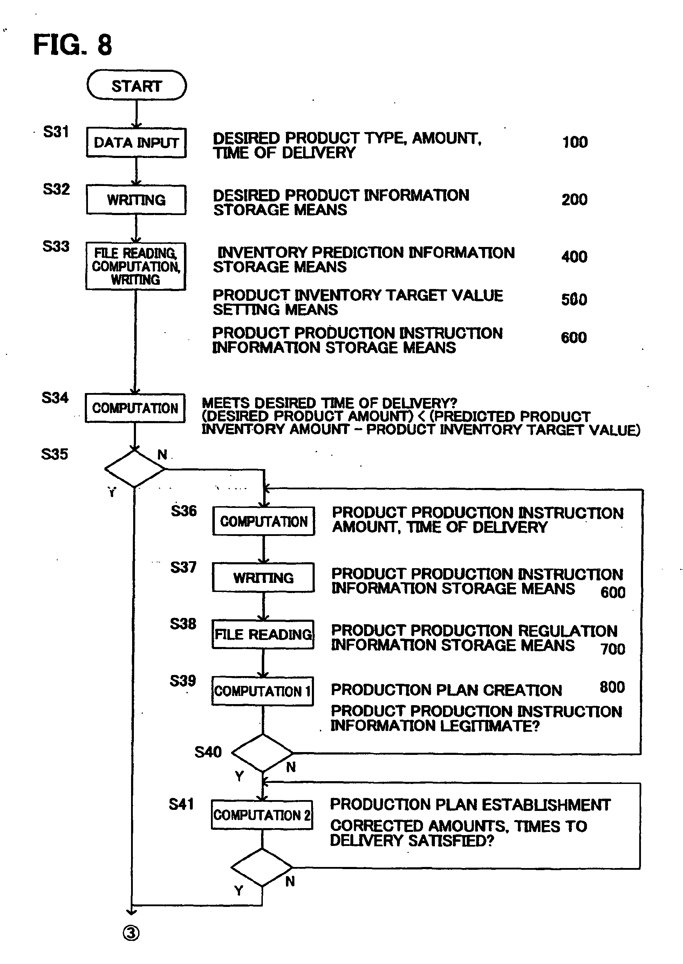

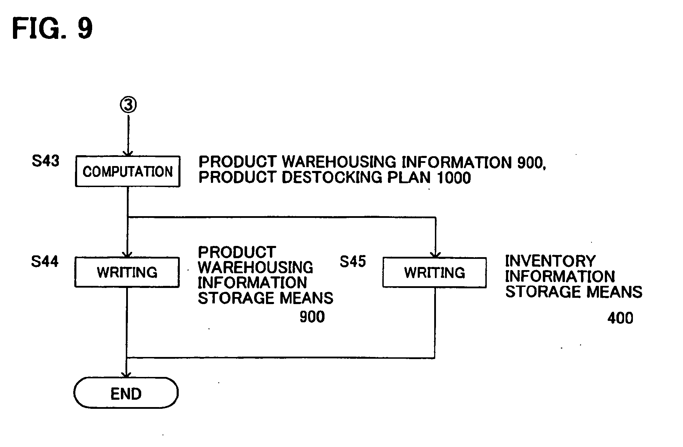

Figs. 8 and 9 are flowcharts showing the processing of one embodiment corresponding to the processing steps comprised by each of the processing step means shown in Fig. 7. Similarly, control is performed through execution of programs stored in the production management system 1 and production planning system 2 of Fig. 1.

Below, the overall operation of the processing step means of Fig. 7 are explained based on the specific embodiment processing flow shown in Figs. 8 and 9. The reference numbers in Figs. 8 and 9 indicate the processing step means having the corresponding reference numbers in Fig. 7.

In processing step S31 of Fig. 8, a man-machine interface 100 is used to input one or more desired product amounts for one or more products and the respective desired times of delivery, as well as differentiation between items demand for which is finalized within the production plan period, and items demand for which is anticipated within the production plan period.

In the case of products demand for which is anticipated within the product plan period, but the time of delivery of which is not clarified, the end of the production plan period is input as the desired time of delivery. Here, products acquisition of which is desired within the production plan period, when the products are in the final product form, are equivalent to items ordered by customers or items for which orders are anticipated; in general, this information is input by a sales or business division. When the products are intermediate materials which have not yet undergone final processing, they are equivalent to ordered items or order-anticipated items from the next step, and in general, the division for the next step performs the input.

In other cases, stockpiled amounts reserved to deal with urgent equipment problems in the current step or in the preceding step, or to accommodate periodic repair periods for equipment anticipated in advance, are generally input at the current step. Hence the man-machine interface 100 has a plurality of input means.

In processing step S32, this data is stored in the desired product information storage means 200. As a specific example, for example, a sales division may input "an order for 10 tons of product type A was received, and so shipment by such-and-such date is desired" (1), and "an order for 8 tons of product type B will probably be received, and so shipment by such-and-such date is desired" (2), and from the next step, "shipment of 10 tons of product type B by such-and-such date to the next step is desired" (3) is input.

In the next month, there are periodic inspections of equipment for production of product type C, and during the period of these periodic inspections, production of product type C will not be possible; hence there is a need to stockpile the anticipated demand amount during this period as product inventory, and so from the current step, "warehousing of 15 tons of product type C by such-and-such date is desired" (4) is input.

Of these, (1) and (3) are due to demand which is finalized, and so are input as having finalized demand, while (2) and (4) result from anticipated demand, and so are simultaneously input as having anticipated demand.

Accordingly, the product types acquisition of which is desired, desired product amounts, desired times of delivery, and whether demand is finalized within the production plan period or is anticipated within the production plan period, is input and stored together in the desired product information storage means 200.

Next, in processing step S33, the product inventory prediction information storage means 400 is opened, and files stored at that time in the product inventory prediction information storage means 400 and the product inventory target value setting means 550 are read. Based on information in the product inventory target value setting means 550, product amounts which must be produced by desired times of delivery for each product are computed. And, the computation results are stored in the product production instruction information storage means 600.

In processing step S34, computations are performed to judge whether the desired product amounts can be provided at the desired time of delivery from predicted product inventory amounts exceeding the product inventory target values, or whether new production must be undertaken; this judgment is made in processing step S35.

In other words, in processing step S35, the judgment about (desired product amount) < the amount (predicted product inventory amount - product inventory target value) is performed. If it is judged that a desired product amount can be provided, at the desired time of delivery, from the amount (predicted product inventory amount - product inventory target value) ("Y" in processing step S35), then execution proceeds to processing step S43, the amount which can be provided and the time of delivery are written, and a product shipment plan is created.

On the other hand, if in processing step S35 it is judged that provision from the amount (predicted product inventory amount - product inventory target value) is not possible, and that new production must be undertaken in order to satisfy the time of delivery, execution proceeds to processing step S36, and the amount which must be produced by the time of delivery is computed. In place of this, it is also possible to allocate the entirety of the predicted product inventory amount to the desired product amount, and input the deficiency in the product inventory target value resulting from this as the desired product amount for the step in question.

In processing step S37, these computation results are written and stored in the database of the product production instruction information storage means 600.

Next, in processing step S38, files stored in the product production regulation information storage means 700 are read, and information which must be taken into consideration when creating a production plan is read, including information related to raw materials used for the production of products, such as for example the constitution of raw materials used, consumption units, product inventory amounts, the period required from order to arrival, and similar; information related to equipment used for the production of products, such as for example the production capacity of the equipment, production conditions such as temperatures, pressures, and speeds, from when equipment will be available for use, and preparation of auxiliary parts for production using this equipment, and similar; information relating to manpower for production of products, such as for example labor productivity to obtain the products, the number of personnel and the time necessary for preparations for production, the number of personnel and the time necessary for cleanup after completion of production, and similar; information related to product inspections, such as for example inspection items and frequency, and the time required for inspections; and, information related to the time required from the start of production until the warehousing of products, as well as information for computation of the materials required for packing, such as the packing form, gross weight, and similar. This is used in computation 1 at the next processing step S39 and in computation 2 at processing step S41.

In processing step S39, computations for creation of a production plan are begun using the production plan creation means 800, and referring to the above-described product production regulation information. First, checks are performed to determine whether the product production instruction amounts and times of delivery are legitimate. That is, in processing step S40, a judgment of whether the production instruction amounts to satisfy desired times of delivery within the production plan period exceed the maximum production capacity registered in the production plan creation means is made.

If the maximum production amount is exceeded, a check is performed to determine by how much the time of delivery should be delayed to cope with this, and the production instruction amount and time of delivery for the product in question are corrected. At this time, the order of correction of times of delivery is from production instruction information for which demand within the production plan period is anticipated; and if the production capacity is still exceeded, then corrections are also performed for production instruction information for which demand within the production plan period is finalized.

Then, the correction part is added to the product production instruction information storage means 600. Based on this corrected product production information, the operation to create a production plan is repeated. That is, when correction of times of delivery is completed, execution proceeds to processing step S41, and a more detailed production plan is created.

Here, the production plan period is divided into periods even shorter than short production plan periods, and production plans are created. That is, if short production plan periods are in week units, then production plans are created for individual days, referring to the product production regulation information.

If short production plan periods are days, then production plans are created for individual hours, referring to the product production regulation information. In processing step S42, a judgment as to whether these production plans satisfy the product production instruction amounts and corrected times of delivery is made; the computation 2 at processing step S41 is performed until they are satisfied, to adjust the production plan.

In cases where a plurality of equipment units are employed in simultaneous production of a plurality of products, it is preferable that the created production plan be output in the form of a Gantt chart.

In processing step S43, shipping plans are created so as to satisfy warehousing plans and desired times of delivery by packing form for shipment and by packing unit, based on the created production plan. And in processing step S44, this information is written to the product warehousing information storage means 900. At the same time, in processing step S45 the product inventory prediction information storage means 400 is updated to have the latest product inventory prediction information, and the processing ends.

In processing steps S43, S44, the product warehousing information storage means 900 is opened, and based on product plans created by the production plan creation means, product warehousing plans are created and stored by packing form and by packing units. At this time, changed information regarding deviations from initial desired product amounts and times of delivery as initially requested are output by the production plan creation means 800, employing corrected production instruction amounts and times of delivery as well as packing units for product shipment, and the responsible divisions are notified.

A product shipping plan is then created and stored in the product warehousing information storage means 900. If there is a need to output this shipping plan, output means 1000 is used for output.

On the other hand, product inventory prediction information is updated and is stored in the product inventory prediction information storage means 400, based on the latest production plan created by the production plan creation means 800 and on the latest warehousing plan and destocking plan created by the product warehousing information storage means 900.

The above are first executed for a long production plan period. Thereafter, the long production plan period is subdivided, and the above are executed for each short production plan period.

Independently of the above processing steps, if the product inventory target value setting means 550 and product production regulation information storage means 700 are closed, then the contents of the product inventory target setting means 550 and product production regulation information storage means 700 can be modified or data appended, at any time and for any arbitrary period.

The relation between the long production plan periods and short production plan periods used in this embodiment is similar to that shown in Fig. 6. In Fig. 6, an example is shown in which a long production plan period I is divided into six short production plan periods II; however, the number of subdivisions is not limited to six, and any number equal to two or greater can be selected.

### In-Process Period

The in-process period for a certain product is the period from the beginning of production, according to a production plan already created, until the product can be warehoused. Of course this in-process period varies greatly from one product to another, and when producing a plurality of products within the same period, a period which is longer than the longest in-process period is set as the long production plan period. By this means, it is possible to promptly cope with large fluctuations in demand for products the in-process period of which is within a short production plan period, and moreover it is also possible to promptly cope with large fluctuations in demand for products the in-process period of which spans a plurality of short production plan periods.

### Product Inventory Target Value Setting Means 550

The product inventory target value setting means 550 sets and stores product inventory values in advance to accommodate demand fluctuations occurring within the production plan periods; the same value may be used within a production plan period, or the value may be changed within a production plan period.

It is preferable that this product inventory target value be set in advance, and then set again according to the circumstances of demand fluctuation after the beginning of production. It is preferable that demand fluctuation information necessary to set a production inventory target value be estimated either by statistical inference from records of past demand fluctuations, or by predictions based on records of past demand fluctuations and with future trends in business conditions incorporated; however, the value may also be set based on the intuition of a person having extensive experience in the field. A method appropriate to the case of the application, or a combination of a number of methods, may be used.

For example, in a case where seasonal fluctuations in demand are seen through the year, demand fluctuations occurring each season may be estimated based on records of fluctuations for each season in the past. Or, in cases where market conditions, currency exchange rates and other external factors are comparatively stable, past demand fluctuations may be analyzed statistically to obtain a value. On the other hand, if market conditions, currency exchange rates, and other external factors vary considerably, it is dangerous to infer future demand from past demand fluctuations alone, and it is preferable to predict and set fluctuation amounts separately, referring to past demand fluctuations, and considering demand-side circumstances and general trends in business conditions.

In the above second embodiment also, an explanation was given assuming the case of a production plan for filaments; but a similar embodiment can be applied for staple fibers as well. In addition to the fiber industry, application to the production of products in other industries is possible as well. Also, terms such as "month", "week" and "day" have been used for illustrative purposes, but of course, these may be replaced by "year", "half-year", "quarter-year", "ten-day period", "hour", or similar.

Next, using a specific example, long production plan periods and short production plan periods, as well as products the acquisition of which is desired in a production plan period and demand for which is finalized, as well as those for which demand is anticipated, and that portion of the desired product amount which exceeds the amount (predicted product inventory amount - product inventory target value) and production instruction amounts, are explained for the case of the second embodiment.

In this example, for explanatory purposes the long production plan period is set to 28 days and short production plan periods are set to 7 days; however, application of this invention is not limited to these period settings.

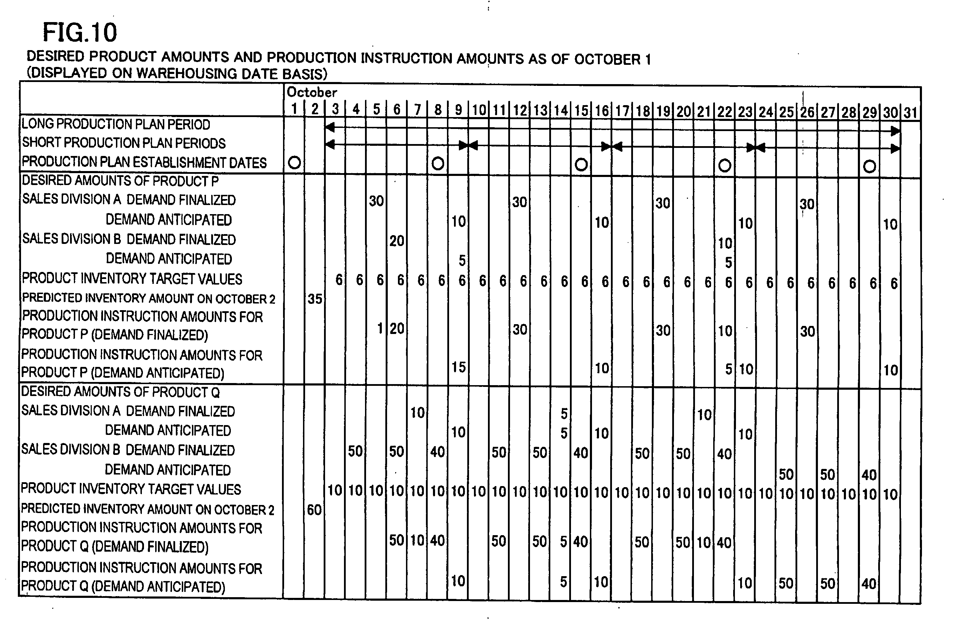

The names of products acquisition of which is desired are taken to be P and Q, and the names of divisions desiring production are A and B. In the table shown in Fig. 10, desired product amounts and desired times of delivery are shown by each product type, divided according to whether demand is finalized or is anticipated, as of October 1, for the long production plan period from October 3 to October 30, and for the first short production plan period from October 3 to October 9.

The numbers in the table are amounts in units of tons; units other than tons may be used instead. Here, representations of desired times of delivery are standardized as the date the product is warehoused; but so long as the representation is standardized, the destocking date or the arrival date may be used instead.

From the desired product amounts arranged in this way by product type and by whether demand is finalized or anticipated, product inventory target values set in advance for each product type and product inventory amounts immediately prior to the production plan period, or the predicted product inventory amounts (based on definitions in this specification, the "product inventory amount or predicted product inventory amount" may simply be called the "predicted product inventory amount") are used to compute production instruction amounts.

Specifically, the difference between a..product amount acquisition of which is desired, and the product inventory at the desired time of delivery or the predicted product inventory amount less the product inventory target value, is calculated separately for items for which demand is finalized, and items for which demand is anticipated.

The results are shown as production instruction amounts in the table of Fig. 10. Production plans are created for the long production plan period and for the first short production plan period so as to satisfy desired times of delivery and production instruction amounts calculated in this way.

Here it is sufficient to satisfy the desired times of delivery and production instruction amounts, and so it is possible to create plans enabling warehousing sooner than the desired times of delivery, or to create plans enabling warehousing of a greater amount than the production instruction amount by the desired time of delivery.

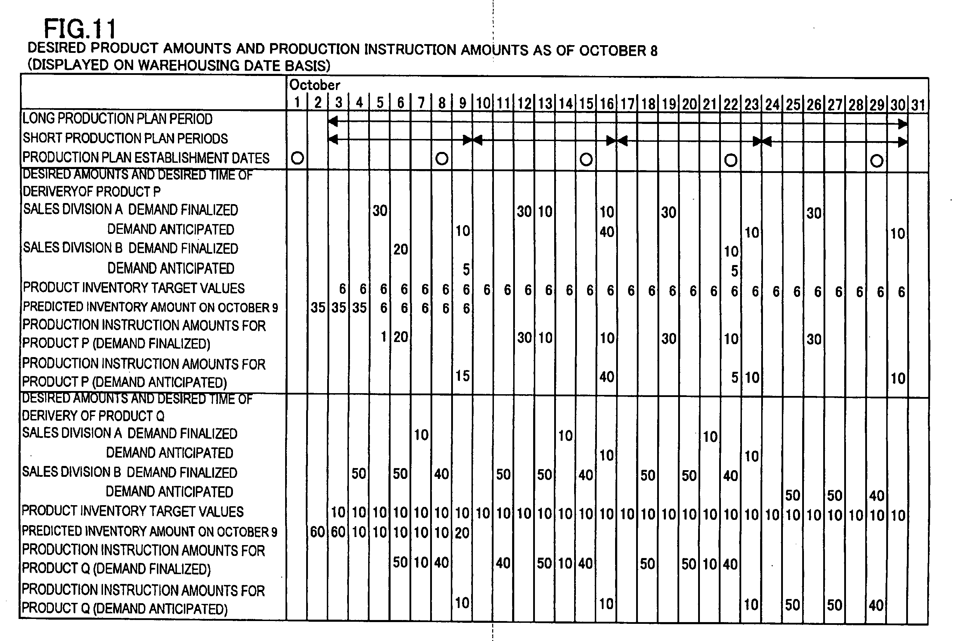

Thereafter, upon performing production according to the production plan, there was a change in demand due to changes in the market. This demand fluctuation, as of October 8, is summarized by the table of Fig. 11. Here the predicted product inventory amount for product Q on October 9 is 20 because the amount of 10 anticipated as the demand at the desired time of delivery, October 9, by Sales Division A on October 1 was canceled due to subsequent market fluctuations.

Based on these desired product amounts, desired times of delivery, product inventory target values, and product inventory amounts or predicted product inventory amounts, production instruction amounts for which demand is finalized and for which demand is anticipated for each of products P and Q are computed. Of course, even if a production plan is created enabling early warehousing so as to satisfy these desired times of delivery, the advantageous results of this invention are not lost.

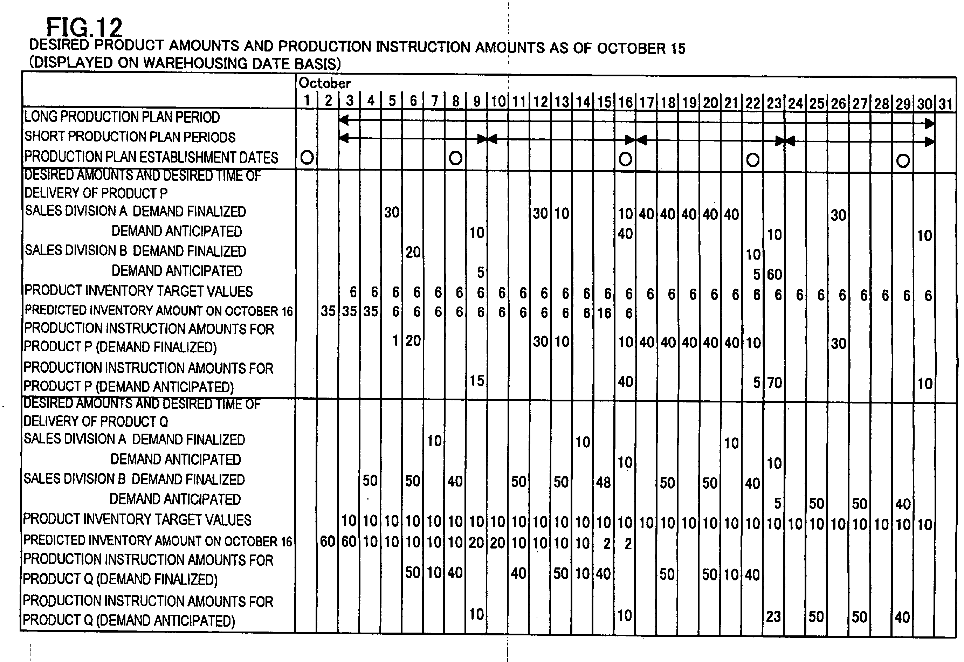

Upon creating a production plan based on the production instruction amounts of the table in Fig. 11 and performing production according to the production plan, demand changed due to changes in the market. Demand fluctuations subsequent to October 9, as of October 15, are summarized in the table of Fig. 12. Here the demand by Sales Division B on October 15 increased from 40 to 48, but because this amount could be provided from the predicted product inventory amount, it was allotted therefrom.

An example is shown in which production instruction amounts are computed such that the replenishment is performed by October 23 at the latest, which is the end of the third short production plan period; however, production instruction amounts may also be computed such that replenishment is performed on October 17.

Replenishment need only be performed within the production plan period; if, for example, replenishment during the third short production plan period from October 17 to October 23 is difficult, replenishment can be performed during the fourth short production plan period.

In other words, in the latest case, replenishment can be performed by the end of the long production plan period. Naturally it is acceptable to perform replenishment earlier than this. On October 23 there was a request from Sales Division B for production of product P to meet a large anticipated demand, and so production instruction amounts change in a usual manner.

The fact that the predicted product inventory amount for product P on October 15 is 16 is the result of creation of a production plan based on production instruction amounts for the second short production plan period, and the result of production divided into 10 tons on October 15 and 30 tons on October 16 in response to a production instruction amount anticipated demand) of 40 tons on October 16.

The reason for thus dividing production is that the warehousing of 50 tons of product P on October 16 would exceed the capacity of the manufacturing step by 10 tons, and moreover there is excess capacity to warehouse 10 tons of product P on October 15, so that the production plan is modified in this way.

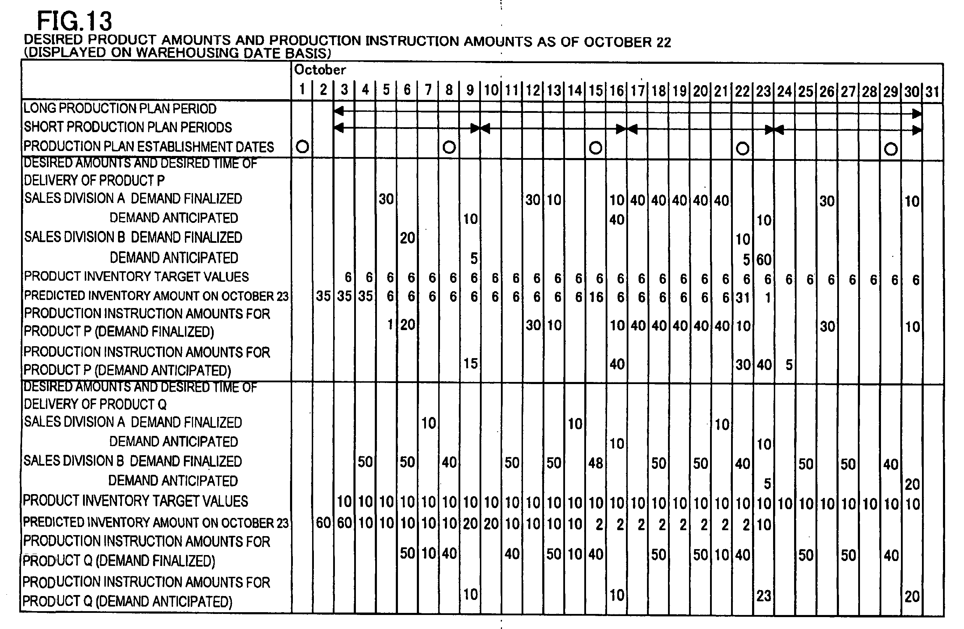

A production plan was created based on the production instruction amounts in the table of Fig. 12, and on performing production according to the production plan, demand changed due to market fluctuations. The table of Fig. 13 summarizes the demand fluctuation subsequent to October 15 as of October 22. In the table, the production instruction amount for product P from October 22 to October 24 is modified when creating the production plan for the third short production plan period, in order to satisfy the large desired product amount on October 23 without exceeding the production capacity.

In the above example, the case in which a production plan beginning October 10 is created on October 8, and a production plan beginning October 17 is created on October 15 is explained; however, if there is need for a longer preparation period following the creation of the production plan, the production plan beginning on October 17 may of course be created on October 8, for example, and the production plan beginning on October 24 may be created on October 15, to secure the necessary preparation period from the creation of the production plan to the beginning of production, without detracting from the action of this invention.

Where demand fluctuations are concerned, it is effective to determine product inventory target values based on fluctuation amounts which can be predicted probabilistically, and for short production plan periods, to determine product inventory target values based on fluctuation amounts that cannot be predicted probabilistically. In this case, to "determine product inventory target values based on fluctuation amounts which can not be predicted probabilistically" includes, in addition to cases in which product inventory target values are determined based solely on fluctuation amounts which cannot be predicted probabilistically, cases in which target values are determined taking into account fluctuation amounts which can be predicted probabilistically. Fluctuation amounts which cannot be predicted probabilistically mean, specifically, amounts corresponding to, for example, "(4) other irregular fluctuations the occurrence of which may be regarded as statistically random" as stated in the above-mentioned Juyou no Bunseki to Yosoku, by Yasuo Matsushima, published by The Nikkan Kogyo Shimbun, Ltd.

### INDUSTRIAL APPLICABILITY

As in the explanations of embodiments above referring to the drawings, by means of this invention, when creating a plan for production of two or more products in the same period, a production plan is created for a period longer than the longest procurement period. Moreover, the period for which the production plan is created is divided into two or more periods which are longer than the shortest procurement period and shorter than the longest procurement period, and production plans are created for each of these subdivided periods.

By this means, a quick-response system can be configured which can promptly cope with demand fluctuations, without the need for excessive product inventories, and without excessive interruptions included in production.

Further, to accommodate product demand fluctuations which may occur during the production plan period, fluctuation amounts which can be predicted probabilistically are maintained in advance as product inventory. By this means, the production plan need not be modified each time a product demand fluctuation occurs, and demand fluctuations can be accommodated on a probabilistic basis.

In the unlikely event that a demand fluctuation larger than what have been predicted probabilistically occurs, by modifying the production plan all at once when creating production plans for two or more production plan periods which are longer than the shortest procurement period and shorter than the longest procurement period, the production plan can be modified efficiently, without changing the production plan each time such a fluctuation occurs.

Thus in this invention, when, after once finalizing a production plan based on demand, it becomes necessary to modify the production plan due to subsequent demand fluctuations, or to cope with repeated changes in anticipated demand when accurate establishment of anticipated demand is difficult, such changes can be accommodated promptly and easily without having excessive product inventory.

## Claims

1. A computer-implemented production method, for producing desired product amounts of desired products having two or more product types in the same period within desired times of delivery so as to optimize production efficiency when demand for the desired products fluctuates, **characterized in that** the production method comprises:
(a) a step (S3;S33) in which a long production plan period is set so that said long production plan period is longer than the longest period among procurement periods for the desired products;
(b) a step (S3;S33) in which short production plan periods are set by dividing said long production plan period into a plurality of periods, wherein each of said plurality of periods is longer than the shortest procurement period and shorter than the longest procurement period among the respective procurement periods;
(c) a step (S3;S33) in which, for each of said long production plan period and said short production plan periods, respective inventory target values and predicted product inventory amounts are set by predicting demand fluctuations for the desired products;
(d) a step (S15;S33) in which, at an arbitrary point in time prior to the beginning of said long production plan period and said short production plan periods, each of product amounts, which is acquired within each of the corresponding production plan periods, is respectively divided into each of finalized amounts for which demand is finalized and each of anticipated amounts for which demand is anticipated; and
(e) a step (S18;S34) in which, among the respective product amounts in step (d), each of exceeding amounts, which is given by subtracting, from each of the corresponding predicted product inventory amounts, each of the corresponding product inventory target values, in the step (c), is produced, giving priority to each of the corresponding finalized amounts, so as to satisfy said desired times of delivery.

2. The computer-implemented production method according to claim 1, wherein,
for said long production plan period, said product inventory target value is determined, based on a fluctuation amount which is predicted probabilistically to accommodate fluctuations in demand for a product which may occur during the long production plan period (S10-S14); and,
for each of said short production plan periods, said product inventory target values are respectively determined based on fluctuation amounts which are predicted probabilistically and fluctuation amounts which are not predicted probabilistically (S10-S14).

3. The computer-implemented production method according to claim 1, wherein said long production plan period is a period exceeding the longest in-process period (S3).

4. The computer-implemented production method according to claim 1, and wherein, when the product amount in step (d) acquired within the corresponding production plan period is greater than a production capacity, giving priority to the corresponding desired product amount for which demand is anticipated, the desired product amount is reduced until it becomes equal to a production capacity within the production plan period, and the reduced desired product amount is added to that of the next production plan period (S24,S26).

5. A computer-implemented production system, for producing desired product amounts of desired products having two or more product types in the same period within desired times of delivery so as to optimize production efficiency by smoothly accommodating demand fluctuations when demand for the desired products fluctuates, **characterized by** comprising:
(A) a production plan period setting means (300), for setting a long production plan period which is longer than the longest procurement period among procurement periods for the desired products, and for setting short production plan periods, obtained by dividing the long production plan period into two or more periods which are longer than a shortest procurement period and shorter than the longest procurement period;
(B) a desired product information database (211) for storing information relating to each of product amounts acquired within each of the corresponding production plan periods, which comprise desired product amounts and desired times of delivery, as well as information whether demand within the corresponding production plan period is finalized or is anticipated;
(C) a product inventory prediction information database (411) for storing information relating to each of predicted product inventory amounts respectively predicted within the corresponding production plan period;
(D) a computation device (410,610) for computing each of fluctuation amounts as each of product inventory target values for a said product within the corresponding production plan period which is predicted probabilistically and for computing each of the exceeding amounts which is given by subtracting from the predicted product inventory amount, the product inventory target value, giving priority to each of the corresponding finalized amounts based on the information stored in the desired product information database within each of the corresponding production plan periods;
(E) a product production instruction information database (611) for storing each of the exceeding amounts computed by said computation device, together with said desired times of delivery; and
(F) a plant (4) for producing the respective exceeding amounts of said desired products based on said product production instruction information database.

## Patentansprüche

1. Ein computerimplementiertes Produktionsverfahren zum Produzieren gewünschter Produktmengen gewünschter Produkte mit zwei oder mehr Produkttypen in der gleichen Periode innerhalb gewünschter Zeiten einer Abgabe so, um Produktionseffizienz zu optimieren, wenn eine Nachfrage nach den gewünschten Produkten schwankt, **gekennzeichnet dadurch, dass** das Produktionsverfahren umfasst:
(a) einen Schritt (S3; S33), in dem eine lange Produktionsplanperiode so eingestellt ist, dass die lange Produktionsplanperiode länger als die längste Periode unter Beschaffungsperioden für die gewünschten Produkte ist;
(b) einen Schritt (S3; S33), in dem kurze Produktionsplanperioden durch Unterteilen der langen Produktionsplanperiode in eine Vielzahl von Perioden eingestellt sind, wobei jede aus der Vielzahl von Perioden länger als die kürzester Beschaffungsperiode und kürzer als die längste Beschaffungsperiode unter den jeweiligen Beschaffungsperioden ist;
(c) einen Schritt (S3; S33), in dem für jede der langen Produktionsplanperiode und der kurzen Produktionsplanperioden jeweilige Bestandszielwerte und vorhergesagte Produktbestandsmengen durch Vorhersagen von Nachfrageschwankungen nach den gewünschten Produkten eingestellt werden;
(d) einen Schritt (S15; S33), in dem in einem beliebigen Zeitpunkt vor dem Beginn der langen Produktionsplanperiode und der kurzen Produktionsplanperioden jede von Produktmengen, die innerhalb jeder der entsprechenden Produktionsplanperioden erlangt werden, jeweils in jede von endgültig festgelegten Mengen, für die Nachfrage endgültig festgelegt ist, und jede von vorhergesagten Mengen, für die Nachfrage erwartet wird, unterteilt ist; und
(e) einen Schritt (S18; S34), in dem unter den jeweiligen Produktmengen in Schritt (d) jede von überschreitenden Mengen, die sich durch Subtrahieren ergibt, von jeder der entsprechenden vorhergesagten Produktbestandsmengen, jeder der entsprechenden Produktbestandszielwerte, in dem Schritt (c), erzeugt wird, wobei jeder der entsprechenden endgültig festgelegten Mengen Priorität gegeben wird, um die gewünschten Zeiten einer Abgabe zu erfüllen.

2. Das computerimplementierte Produktionsverfahren nach Anspruch 1, wobei
für die lange Produktionsplanperiode der Produktbestandszielwert basierend auf einer Schwankungsmenge bestimmt wird, die wahrscheinlichkeitstheoretisch vorhergesagt wird, um Schwankungen in einer Nachfrage nach einem Produkt unterzubringen, die während der langen Produktionsplanperiode auftreten kann (S10-S14); und
für jede der kurzen Produktionsplanperioden die Produktbestandszielwerte jeweils basierend auf Schwankungsmengen, die wahrscheinlichkeitstheoretisch vorhergesagt werden, und Schwankungsmengen, die nicht wahrscheinlichkeitstheoretisch vorhergesagt werden (S10-S14), bestimmt werden.

3. Das computerimplementierte Produktionsverfahren nach Anspruch 1, wobei die lange Produktionsplanperiode eine Periode ist, die die längste Periode in Bearbeitung überschreitet (S3).

4. Das computerimplementierte Produktionsverfahren nach Anspruch 1, und wobei, wenn die Produktmenge in Schritt (d), die innerhalb der entsprechenden Produktionsplanperiode erlangt wird, größer als eine Produktionskapazität ist, wobei der entsprechenden gewünschten Produktmenge Priorität gegeben wird, für die Nachfrage erwartet wird, die gewünschte Produktmenge reduziert wird, bis sie gleich einer Produktionskapazität innerhalb der Produktplanperiode wird, und die reduzierte gewünschte Produktmenge der der nächsten Produktplanperiode hinzugefügt wird (S24, S26).

5. Ein computerimplementiertes Produktionssystem zum Produzieren gewünschter Produktmengen von gewünschten Produkten mit zwei oder mehr Produkttypen in der gleichen Periode innerhalb gewünschter Zeiten einer Abgabe so, um Produktionseffizienz durch reibungsfreies Unterbringen von Nachfrageschwankungen zu optimieren, wenn Nachfrage nach den gewünschten Produkten schwankt, **gekennzeichnet durch** Umfassen:
(A) eines Produktplanperiodeneinstellmittels (300) zum Einstellen einer langen Produktionsplanperiode, die länger als die längste Beschaffungsperiode unter Beschaffungsperioden für die gewünschten Produkte ist, und zum Einstellen kurzer Produktplanperioden, die durch Unterteilen der langen Produktplanperiode in zwei oder mehr Perioden erhalten werden, die länger als eine kürzeste Beschaffungsperiode und kürzer als die längste Beschaffungsperiode sind;
(B) einer gewünschten Produktinformationsdatenbank (211) zum Speichern von Information in Bezug auf jede von Produktmengen, die innerhalb jeder der entsprechenden Produktionsplanperioden erlangt werden, die gewünschte Produktmengen und gewünschte Zeiten einer Abgabe umfasst, ebenso wie Information, ob Nachfrage innerhalb der entsprechenden Produktionsplanperiode endgültig vorhergesagt ist oder erwartet wird.
(C) einer Produktbestandsvorhersageinformationsdatenbank (411) zum Speichern von Information in Bezug auf jede von vorhergesagten Produktbestandsmengen, die jeweils innerhalb der entsprechenden Produktionsplanperiode vorhergesagt werden;
(D) einer Berechnungseinrichtung (410, 610) zum Berechnen von jeder von Schwankungsmengen als jeden von Produktbestandszielwerten für ein Produkt innerhalb der entsprechenden Produktplanperiode, die wahrscheinlichkeitstheoretisch vorhergesagt wird, und zum Berechnen jeder der überschreitenden Mengen, die sich **durch** Subtrahieren von der vorhergesagten Produktbestandsmenge ergibt, des Produktbestandszielwertes, wobei jeder der entsprechenden endgültig festgelegten Mengen Priorität gegeben wird basierend auf der Information, die in der Informationsdatenbank gewünschter Produkte gespeichert ist, innerhalb jeder der entsprechenden Produktionsplanperioden;
(E) einer Produktproduktionsinstruktionsinformationsdatenbank (611) zum Speichern jeder der überschreitenden Mengen, die **durch** die Berechnungseinrichtung berechnet werden, zusammen mit den gewünschten Zeiten einer Abgabe; und
(F) einer Fabrik (4) zum Erzeugen der jeweiligen überschreitenden Mengen der gewünschten Produkte basierend auf der Produktproduktionsinstruktionsinformationsdatenbank.

## Revendications

1. Procédé de production informatisé, pour produire des quantités souhaitées de produits désirés ayant deux ou plusieurs types de produits dans la même période dans les limites de délais de livraison souhaités de sorte à optimiser le rendement de production lorsque la demande pour les produits désirés fluctue, **caractérisé en ce que** le procédé de production comprend :
(a) une étape (S3 ; S33) dans laquelle une longue période de plan de production est fixée de sorte que ladite longue période de plan de production soit plus longue que la période la plus longue parmi les périodes d'approvisionnement pour les produits désirés ;
(b) une étape (S3; S33) dans laquelle de courtes périodes de plan de production sont fixées en divisant ladite longue période de plan de production en une pluralité de périodes, dans lequel chacune de ladite pluralité de périodes est plus longue que la plus courte période d'approvisionnement et plus courte que la période d'approvisionnement la plus longue parmi les périodes d'approvisionnement respectives;
(c) une étape (S3 ; S33) dans laquelle, pour chacune de ladite longue période de plan de production et desdites courtes périodes de plan de production, des valeurs visées d'inventaire et des quantités prédites d'inventaire de produit respectives sont fixées en prédisant les fluctuations de la demande pour les produits désirés ;
(d) une étape (S15 ; S33) dans laquelle, à un instant arbitraire avant le début de ladite longue période de plan de production et desdites courtes périodes de plan de production, chacune des quantités de produit, qui est acquise durant chacune des périodes de plan de production correspondantes, est respectivement divisée en chacune de quantités finalisées pour lesquelles la demande est finalisée et en chacune de quantités anticipées pour lesquelles la demande est anticipée ; et
(e) une étape (S18 ; S34) dans laquelle, parmi les quantités respectives de produit dans l'étape (d), chacune des quantités excédentaires, qui est obtenue en soustrayant de chacune des quantités prédites d'inventaire de produit correspondantes chacune des valeurs visées d'inventaire de produit correspondantes, dans l'étape (c), est produite, en donnant la priorité à chacune des quantités finalisées correspondantes, de sorte à respecter lesdits délais de livraison.

2. Procédé de production informatisé selon la revendication 1, dans lequel,
pour ladite longue durée de plan de production, ladite valeur visée d'inventaire de produit est déterminée, en se basant sur une quantité de fluctuation qui est prédite de façon probabiliste afin de tenir compte des fluctuations de demande pour un produit qui peuvent se produire durant la longue période de plan de production (S10 à S14) ; et,
pour chacune desdites courtes périodes de plans de production, lesdites valeurs visées d'inventaire de produit sont respectivement déterminées en se basant sur les quantités de fluctuation qui sont prédites de façon probabiliste et sur les quantités de fluctuation qui ne sont pas prédites de façon probabiliste (S10 à S14).

3. Procédé de production informatisé selon la revendication 1, dans lequel ladite longue période de plan de production est une période dépassant la plus longue période de cours de production (S3).

4. Procédé de production informatisé selon la revendication 1, et dans lequel, lorsque la quantité de produit dans l'étape (d) acquise durant la période de plan de production correspondante est supérieure à une capacité de production, en donnant la priorité à la quantité souhaitée de produit correspondante pour laquelle la demande est anticipée, la quantité souhaitée de produit est réduite jusqu'à ce qu'elle devienne égale à une capacité de production durant la période de plan de production, et la quantité souhaitée de produit réduite est ajoutée à celle de la période de plan de production suivante (S24, S26).

5. Système de production informatisé, pour produire des quantités souhaitées de produits désirés ayant deux ou plusieurs types de produits dans la même période dans des limites de délais de livraison souhaités de sorte à optimiser le rendement de production en tenant compte en douceur des fluctuations de demande lorsque la demande pour les produits désirés fluctue, **caractérisé en qu'**il comprend :
(A) un moyen d'établissement de périodes de plan de production (300), pour fixer une longue période de plan de production qui est plus longue que la période d'approvisionnement la plus longue parmi les périodes d'approvisionnement pour les produits désirés, et pour fixer de courtes périodes de plan de production, obtenues en divisant la longue période de plan de production en deux ou plusieurs périodes qui sont plus longues qu'une plus courte période d'approvisionnement et plus courtes que la plus longue période d'approvisionnement ;
(B) une base de données d'informations relatives aux produits désirés (211) pour stocker des informations relatives à chacune des quantités de produit acquises dans chacune des périodes de plan de production correspondantes, qui comprennent les quantités souhaitées de produit et les délais de livraison souhaités, ainsi que des informations indiquant si la période de plan de production correspondante est finalisée ou est anticipée ;
(C) une base de données d'informations relatives à la prédiction d'inventaire de produits (411) pour stocker des informations relatives à chacune des quantités prédites d'inventaire de produit qui sont respectivement prédites durant la période de plan de production correspondante ;
(D) un dispositif de calcul (410, 610) pour calculer chacune des quantités de fluctuation comme étant chacune des valeurs visées d'inventaire de produit pour un dit produit durant la période de plan de production correspondante qui est prédite de façon probabiliste et pour calculer chacune des quantités excédentaires qui est obtenue en soustrayant de la quantité d'inventaire de produit prédite la valeur visée d'inventaire de produit, en donnant la priorité à chacune des quantités finalisées correspondantes en se basant sur les informations stockées dans la base de données d'informations relatives au produit désiré durant chacune des périodes de plan de production correspondantes ;
(E) une base de données d'informations relatives aux instructions de production de produits (611) pour stocker chacune des quantités excédentaires calculées par ledit dispositif de calcul, conjointement auxdits délais de livraison souhaités ; et
(F) une usine (4) pour produire les quantités excédentaires respectives desdits produits désirés en se basant sur ladite base de données d'informations relatives aux instructions de production de produits.
